# EUROPEAN PATENT APPLICATION

(11) **EP 4 701 011 A1**
(43) Date of publication of application: **25.02.2026**
(21) Application number: 25186617.4
(22) Date of filing: 01.07.2025
(51) Int. Cl.: H02G 1/06, B65H 57/14, B66D 1/36, H02G 1/08, H02G 3/30

(54) **LINE MANAGEMENT DEVICES, CABLE MANAGEMENT DEVICES AND METHODS FOR GUIDING LOCAL DISTRIBUTION OF UTILITY LINES**

(30) Priority: 20.08.2024 US 202418809566
(71) Applicant: The Boeing Company, Arlington, VA 22202 (US)
(72) Inventor: BLAKE, Diane J., Arlington, VA, 22202 (US); SARAULT, Mark W., Arlington, VA, 22202 (US); DUTTER, Jason P., Arlington, VA, 22202 (US)
(74) Representative: Hoffmann Eitle

(57) **Abstract**

A line management device for guiding local distribution of a utility line includes a main body with a middle portion, a first end portion and a second end portion. The middle portion includes a first end, a second end and a contoured surface extending between the first end and the second end. The contoured surface directs the utility line in relation to an object in a local environment. The first end portion abuts the first end of the middle portion and includes a first exterior surface shaped to direct the utility line toward the middle portion and to obstruct the utility line from passing over the first end portion. The second end portion abuts the second end of the middle portion and includes a second exterior surface shaped to direct the utility line toward the middle portion and to obstruct the utility line from passing over the second end portion.

## Description

### FIELD

The present disclosure relates generally to line management devices for guiding local distribution of utility lines and, more particularly, to cable management devices for guiding local distribution of electrical cables. The devices can be used to guide local distribution of various other types of utility lines, such as electrical cords, electrical wires, wire harnesses, conduit, pressurized air lines, vacuum lines, air ducts, water pipes and hydraulic lines. The devices can be positioned in various local environments, such as commercial buildings, business offices, cubicle areas, residential buildings, living areas, commercial vehicles and personal vehicles. Numerous other types of utility lines and local environments are also contemplated.

### BACKGROUND

While custodial services perform routine tasks of cleaning many offices with electrically powered machines, the power cords are pulled through cubicles and around metal partitions. These cords get caught under the sharp metallic corners which causes the cord insulation to be stripped and may cause wire insulation to be stripped causing arc hazards. This puts the employee at risk of electric shock and bums and creates fire hazards. Musculoskeletal injuries have been reported from being jolted by pulling the cord and then suddenly stopped because the cord catches on an obstacle.

Currently a custodial worker moves through many office cubicles by pulling electrical cords while vacuuming. As the cords are being pulled around corners of the metallic office cubicle, they get wedged under the sharp metal frame. The employee must slow down to guide the cord around each cubicle. Time loss from this practice causes more work for the employee and slows down this task.

Accordingly, those skilled in the art continue with research and development efforts to improve techniques for guiding local distribution of cords and other utility lines.

### SUMMARY

Disclosed are examples of line management devices, cable management devices and methods for guiding local distribution of utility lines. The following is a non-exhaustive list of examples, which may or may not be claimed, of the subject matter according to the present disclosure.

In an example, a line management device for guiding local distribution of a utility line includes a main body with a central axis. The main body includes a middle portion, a first end portion and a second end portion. The middle portion intersecting the central axis and including a first end, a second end and a contoured surface extending between the first end and the second end. The contoured surface has a contour to direct the utility line in relation to an object in a local environment. The first end portion intersecting the central axis, abutting the first end of the middle portion and including a first exterior surface. The first exterior surface is shaped to direct the utility line toward the middle portion and to obstruct the utility line from passing over the first end portion and outside the main body. The second end portion intersecting the central axis, abutting the second end of the middle portion and including a second exterior surface. The second exterior surface is shaped to direct the utility line toward the middle portion and to obstruct the utility line from passing over the second end portion and outside the main body.

In an example, a method for guiding local distribution of a utility line includes:
(1) installing a line management device in relation to an object in a local environment, the line management device including a main body with a middle portion having a contoured surface extending between a first end and a second end, a first end portion abutting the first end of the middle portion and a second end portion abutting the second end of the middle portion; (2) placing the utility line proximate to the contoured surface; (3) pulling the utility line across the contoured surface; and (4) spacing the utility line away from the object in the local environment and guiding the utility line away from the object.

In an example, a cable management device for guiding local distribution of an electrical cable includes a main body and one or more magnets. The main body has a central axis and includes a middle portion, a first end portion and a second end portion. The middle portion intersecting the central axis and including a first end, a second end and a contoured surface extending between the first end and the second end. The contoured surface has a contour to direct the electrical cable in relation to an object in a local environment. The first end portion intersecting the central axis, abutting the first end of the middle portion and including a first exterior surface. The first exterior surface is shaped to direct the electrical cable toward the middle portion and to obstruct the electrical cable from passing over the first end portion and outside the main body. The second end portion intersecting the central axis, abutting the second end of the middle portion and including a second exterior surface. The second exterior surface is shaped to direct the electrical cable toward the middle portion and to obstruct the electrical cable from passing over the second end portion and outside the main body. The one or more magnets embedded in one or more of the middle portion, the first end portion and the second end portion. The one or more magnets configured to secure the main body to the object in the local environment.

Other examples of the disclosed line management devices, cable management devices and methods for guiding local distribution of utility lines will become apparent from the following detailed description, the accompanying drawings and the appended claims.

### BRIEF DESCRIPTION OF THE DRAWINGS

Fig. 1 is a front view of an example of a line management device for guiding local distribution of a utility line;
Fig. 2 is a perspective view of an example of a local environment in which two line management devices of Fig. 1 and a utility line are placed in relation to an object in the local environment;
Fig. 3 is a front view of another example of a line management device for guiding local distribution of a utility line;
Fig. 4A is a bottom view of yet another example of a line management device for guiding local distribution of a utility line;
Fig. 4B is a top view of still another example of a line management device for guiding local distribution of a utility line;
Fig. 4C is a top view of an example of a mounting plate used to attach still yet another example of a line management device in another example of a local environment;
Fig. 5 is a front view of still yet another example of a line management device for guiding local distribution of a utility line;
Fig. 6 is a perspective view of an example of a first end portion of the line management device of Fig. 5;
Fig. 7 is another front view of the line management device of Fig. 1;
Fig. 8A is a perspective view of an example of a first end portion of the line management device of Fig. 7;
Fig. 8B is a perspective view of an example of a second end portion of the line management device of Fig. 7;
Fig. 9 is a perspective view of an example a truncated main body for a line management device;
Fig. 10A is a bottom view of another example of a truncated main body for a line management device;
Fig. 10B is a top view of yet another example of a truncated main body for a line management device;
Fig. 10C is a top view of an example of a mounting plate used to attach a truncated main body for a line management device in a local environment;
Fig. 11A is a perspective view of another example of a second end portion with an example of a retaining lip for a truncated main body;
Fig. 11B is a sectional view of another example of an object in yet another example of a local environment;
Fig. 11C is a perspective view of yet another example of a second end portion with another example of a retaining lip for a truncated main body;
Fig. 12 is a perspective view of an example of an extension member for a line management device with a truncated main body;
Fig. 13A is a perspective view of an example of a nested extension member for installation on a second end portion of a line management device;
Fig. 13B is a cross-sectional view of an example of the second end portion of Fig. 13A;
Fig. 14 is a perspective view showing an example of a recessed area in an object of a local environment;
Fig. 15 is yet another front view of the line management device of Fig. 1;
Fig. 16 is a flow diagram of an example of a method for guiding local distribution of a utility line;
Fig. 17 is a flow diagram of an example of the installing of the line management device in the method of Fig. 16;
Fig. 18, in combination with Fig. 16, is a flow diagram of another example of a method for guiding local distribution of a utility line and another example of the installing of the line management device in the method of Fig. 16;
Fig. 19, in combination with Fig. 16, is a flow diagram of yet another example of the method for guiding local distribution of a utility line;
Fig. 20 is a flow diagram of yet another example of the installing of the line management device in the method of Fig. 16;
Fig. 21 is a flow diagram of still another example of the installing of the line management device in the method of Fig. 16;
Fig. 22A is an exploded view of still another example of a line management device for guiding local distribution of a utility line;
Fig. 22B is a perspective view of the line management device of Fig. 22A showing the top;
Fig. 22C is another perspective view of the line management device of Fig. 22A showing the bottom;
Fig. 23 is a flow diagram of still yet another example of the installing of the line management device in the method of Fig. 16;
Fig. 24 is a flow diagram of another example of the installing of the line management device in the method of Fig. 16;
Fig. 25A is an exploded view of still yet another example of a line management device for guiding local distribution of a utility line;
Fig. 25B is a side view of the line management device of Fig. 25A shown in assembled form;
Fig. 26, in combination with Fig. 23, is a flow diagram of yet another example of the installing of the line management device in the method of Fig. 16;
Fig. 27 is a block diagram of aircraft production and service methodology that implements one or more of the examples of line management devices, cable management devices and methods for guiding local distribution of utility lines disclosed herein;
Fig. 28 is a schematic illustration of an aircraft that incorporates one or more of the examples of line management devices and cable management devices for guiding local distribution of utility lines disclosed herein;
Fig. 29A is a perspective view of yet another example a truncated main body for a line management device; and
Fig. 29B is a perspective view of still yet another example a truncated main body for a line management device.

### DETAILED DESCRIPTION

Various examples of line management devices 100, cable management devices 126 and methods 1600, 1800, 1900 provide techniques The line management devices and the cable management devices. For example, the utility lines 102 include electrical cords, electrical wires, wire harnesses, conduit, pressurized air lines, vacuum lines, air ducts, water pipes and hydraulic lines. The line management devices 100 and cable management devices 126 devices may be installed in various local environments 200, such as commercial buildings, business offices, cubicle areas, residential buildings, living areas, commercial vehicles and personal vehicles. Numerous other types of utility lines 102 and local environments 200 are also contemplated.

In one example, a magnetic detachable cord management device facilitates movement of power cords around metal structures, such as cubicle walls or doors. An interior of the cord management device attaches to a structural element of the local environment 200 via a 90-degree section containing a series of magnets (e.g., two upper and two lower magnets). The exterior of the cord management device has a smooth, rounded surface with contoured guides to prevent a cord from rising over the top of the device. The radius of the cord management device directs the cord away from the floor and prevents the cord from wedging under the cubicle frame. An additional magnet may be embedded on top of the cord management device for installation and removal of the device using a magnetic pole to reduce bending over. The cord management device may include stackable height adjuster plates to allow for different size openings on the bottom of the cubicle. Optionally, the cord management device may contain a rounded cap with a cord channel on both ends to allow the cord to pass thru the door or over an edge of cubicle.

The various examples of the line management devices and the cable management devices includes cord saver mushroom models, stackable mushroom models and apple core models that attach, for example, to cubicles and/or doors via magnets to protect, for example, electrical cords of vacuums and other devices that are used around structures that can snag the cord which may strip the insulation and lead to electrical shock and fire hazards. The snagging of the cord can also cause musculoskeletal injuries and falls.

The various examples of the line management devices and the cable management devices may include a rounded cap with a cord channel to keep the cord from rising over the top of the device and two stackable height adjuster plates to allow for different size openings, for example, on the bottom of the cubicle. The line management devices and the cable management devices may be used to prop open a door and to provides a cable pass through path. For example, the line management devices and the cable management devices are used to help protect cords of vacuums, carpet cleaners, and other electrical corded devices that are used in office spaces, or around structures and doors. The cord can also get caught causing the person using the corded device to get pulled backwards causing injury.

Various examples of the line management devices and the cable management devices may be attached to cubical walls or doors via magnets to keep, for example, cords from getting trapped under the structure. The line management devices and the cable management devices are easily attached and removed, light weight, and may have a magnet on top to allow for installation and removal with an extension wand for improved ergonomics. The apple core models can be used to prop open doors and allow cords to easily pass through the opening. The apple core models can also sit on top of cubicle walls to allow the cord to pass over the edge and be retained within a distribution path.

Various examples of the line management devices and the cable management devices can be 3D printed. Various examples are magnetic detachable corner covers that allow, for example, custodial worker to easily attach the line management devices and cable management devices to, for example, metal office cubicle corners during cleaning sessions. This allows the electrical cords to be pulled around corners without catching on the sharp metal and reduces drag from the cord being pinched and snagged which can cause musculoskeletal injuries.

Various examples of the detachable corner covers have neodymium magnets embedded inside the covers so the custodial worker can use a pole (e.g., a broom handle) with a magnet thereon to quickly attach or detach the cover to reduce bending over and stooping. The design of the detachable corner covers allows them to be attached on top of cubicle borders to contain an electrical cord in a desired location to prevent it from sliding. A specially curved compound radius plastic corner guide with neodymium magnets for easy attachment and removal allows electrical cords to slide around metal office cubicle frames. The radius on the top and bottom of the guide directs the cord away from the floor and prevents it from wedging under the cubicle frame.

A smooth compound radius plastic clip-on cover with magnets embedded inside the material so it is easily attached and detached for fast moving operations of the custodial worker. An additional magnet may be embedded on the top of the detachable corner cover so a custodial worker can use a magnetic broom handle or similar to quickly remove and attach this device. All operations that pull electrical cords through and around office spaces or similar tasks may implement the methods for guiding distribution of utility lines to eliminate, for example, electrical cords from snagging on the frame of cubicles.

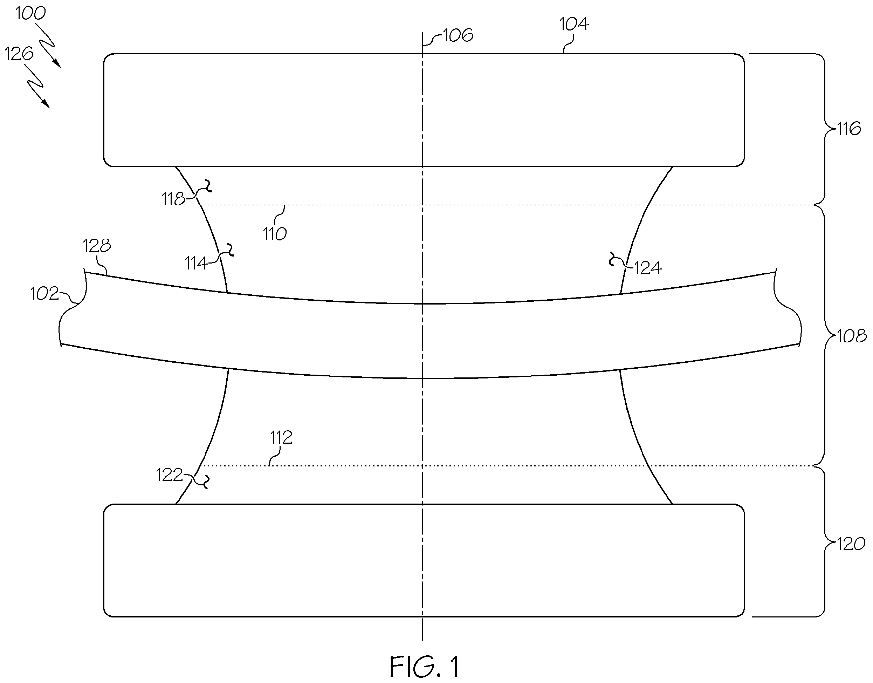

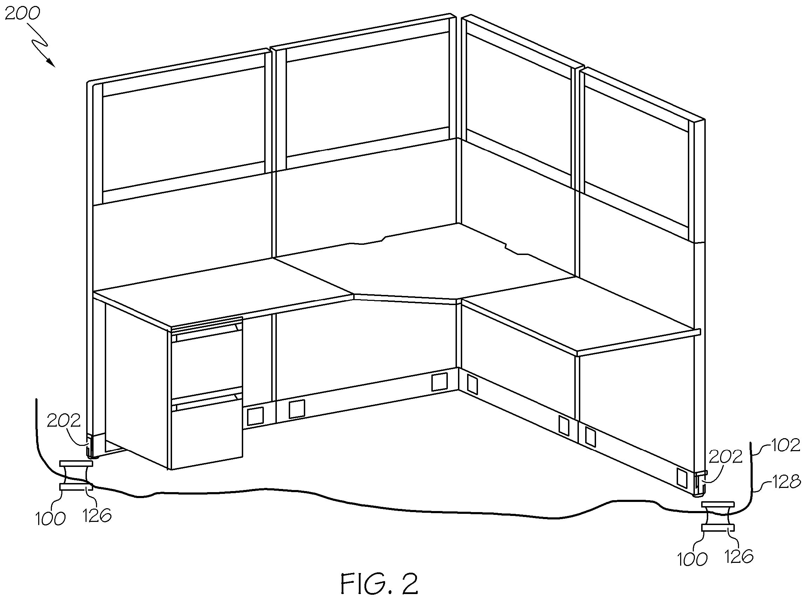

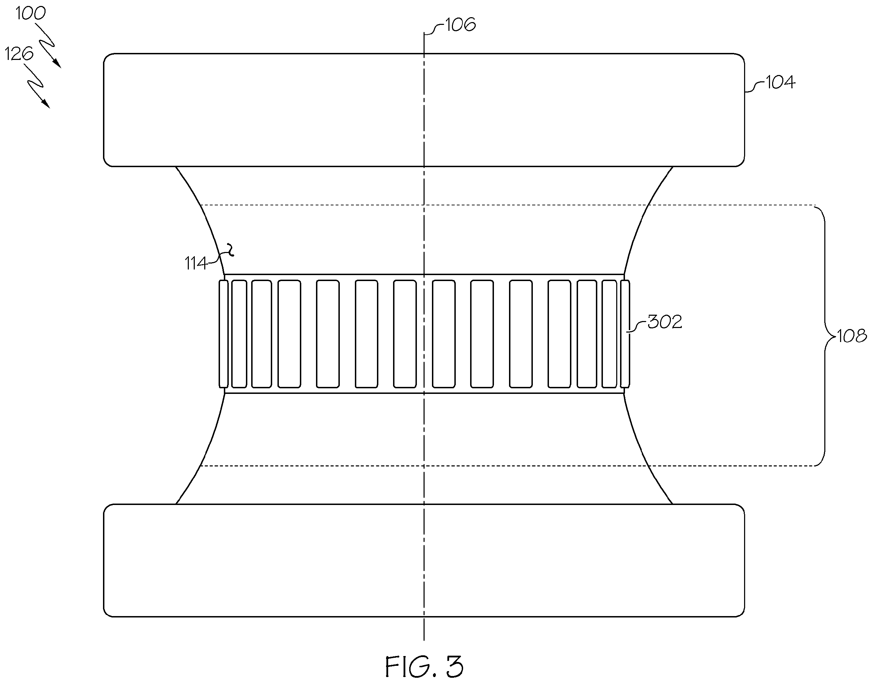

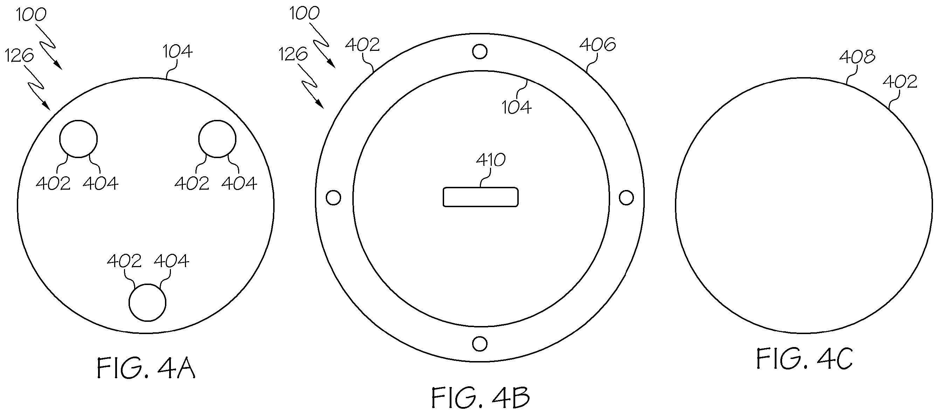

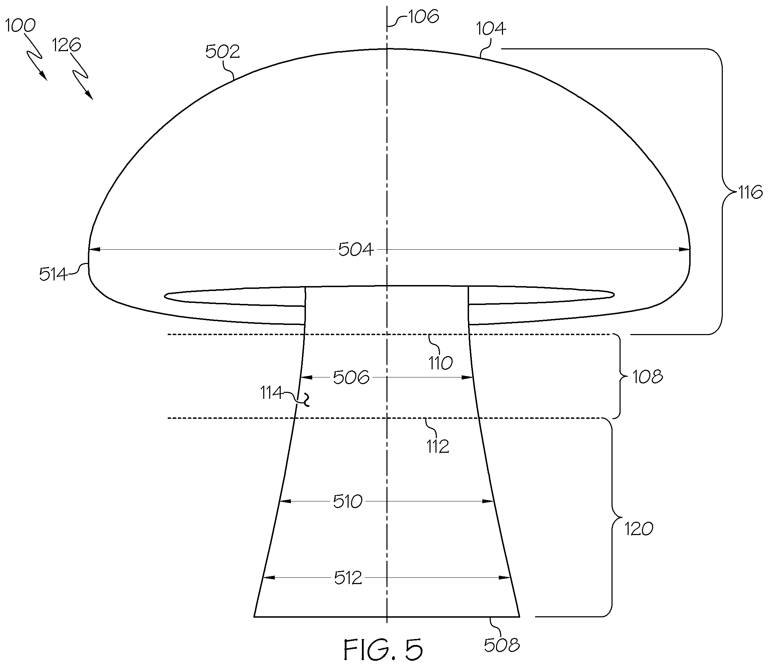

Referring generally to Figs. 1-3, 4A-C, 5-7, 8A-B, 9, 10A-C, 11A-C, 12, 13A-B, 14, 15, 22A-C and 25A-B, by way of examples, the present disclosure is directed to a line management device 100 for guiding local distribution of a utility line 102. Fig. 1 shows an example of a line management device 100 for guiding local distribution of a utility line 102. Fig. 2 shows an example of a local environment 200 in which two line management devices 100 of Fig. 1 and a utility line 102 are placed in relation to an object 202 in the local environment 200. Fig. 3 shows another example of a line management device 100 for guiding local distribution of a utility line 102. Fig. 4A shows a bottom view of yet another example of a line management device 100 for guiding local distribution of a utility line 102. Fig. 4B shows a top view of still another example of a line management device 100 for guiding local distribution of a utility line102. Fig. 4C shows an example of a mounting plate 408 used to attach still yet another example of a line management device 100 in another example of a local environment 200. Fig. 5 shows still yet another example of a line management device 100 for guiding local distribution of a utility line 102.

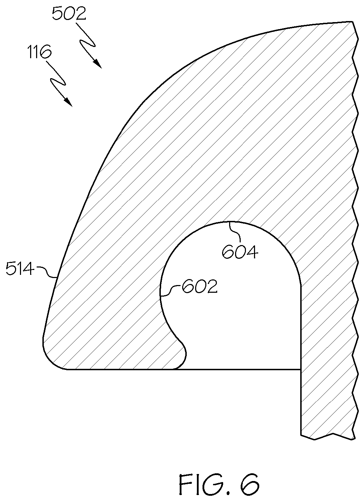

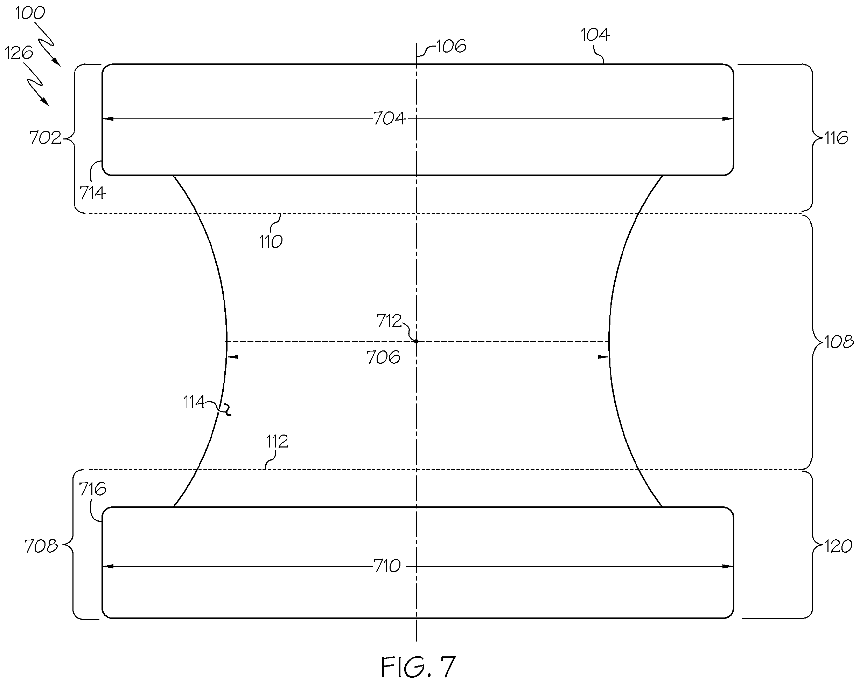

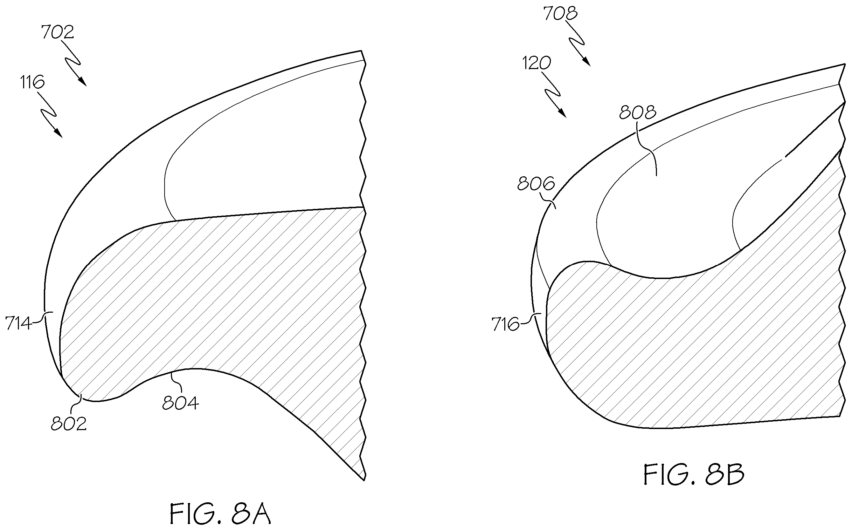

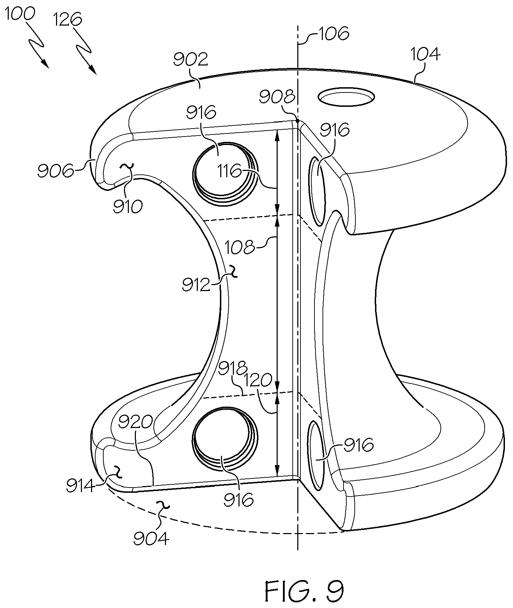

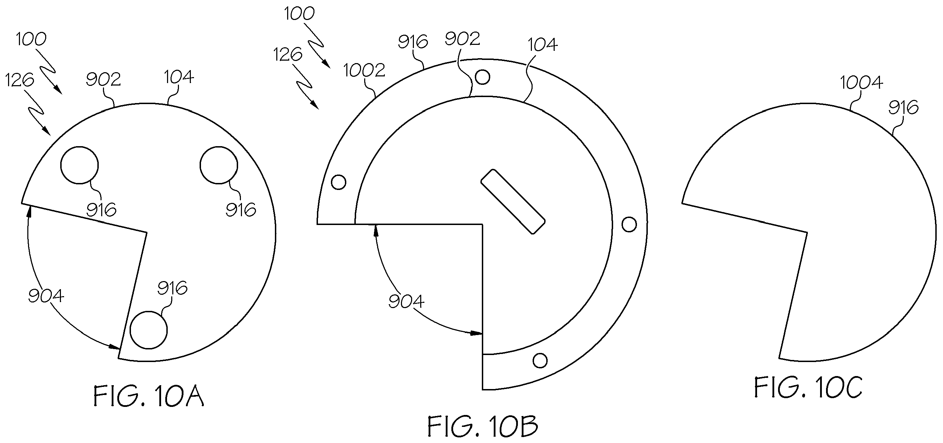

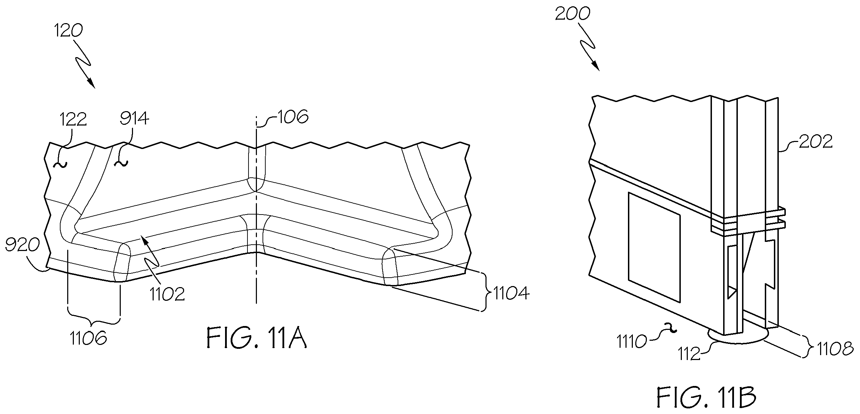

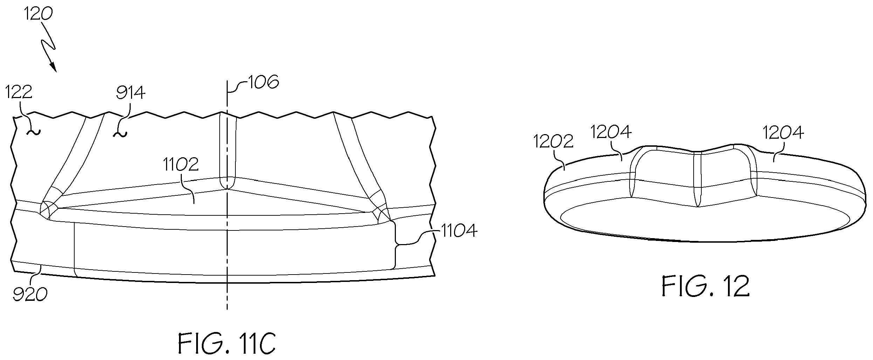

Fig. 6 shows an example of a first end portion 116 of the line management device 100 of Fig. 5. Fig. 7 shows another front view of the line management device 100 of Fig. 1. Fig. 8A shows an example of a first end portion 116 of the line management device 100 of Fig. 7. Fig. 8B shows an example of a second end portion 120 of the line management device 100 of Fig. 7. Fig. 9 shows an example of a truncated main body 902 for a line management device 100. Fig. 10A shows a bottom view of another example of a truncated main body 902 for a line management device 100. Fig. 10B shows a top view of yet another example of a truncated main body 902 for a line management device 100. Fig. 10C shows a top view of an example of a mounting plate 1004 used to attach a truncated main body 902 for a line management device 100 in a local environment 200. Fig. 11A shows another example of a second end portion 120 with an example of a retaining lip 1102 for a truncated main body 902. Fig. 11B shows a sectional view of another example of an object 202 in yet another example of a local environment 200. Fig. 11C shows yet another example of a second end portion 120 with another example of a retaining lip 1102 for a truncated main body 902.

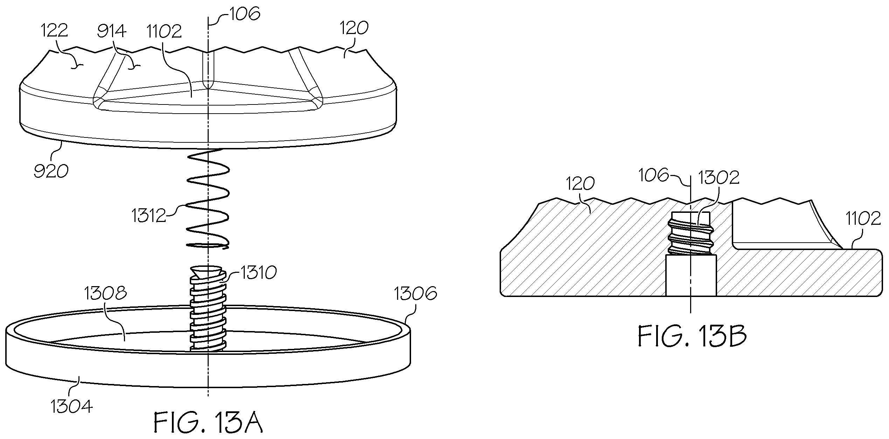

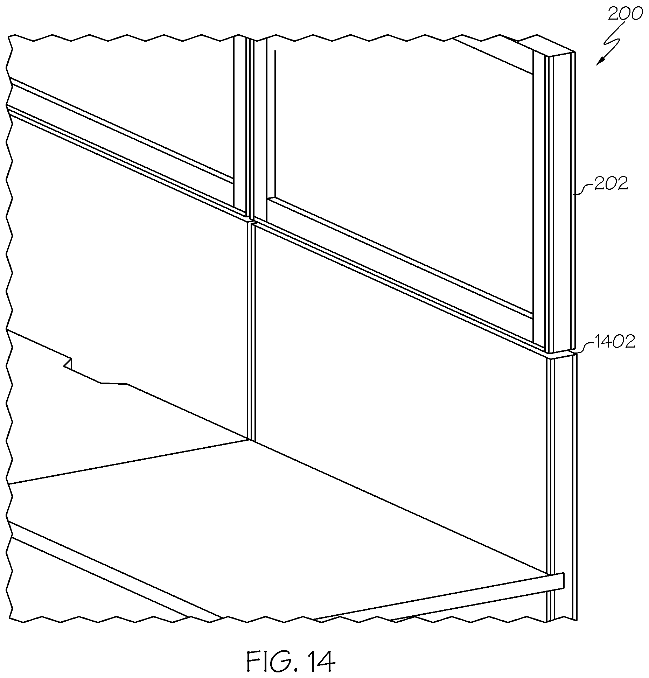

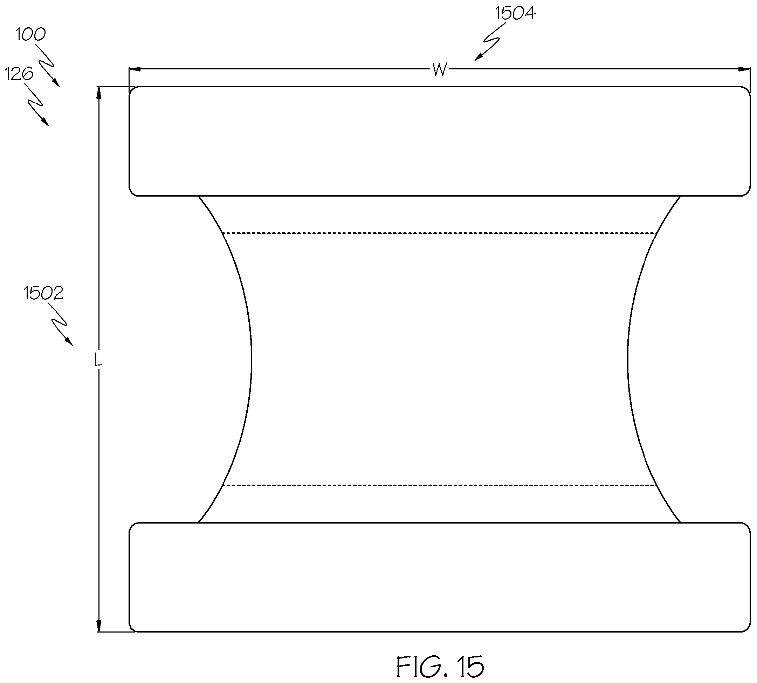

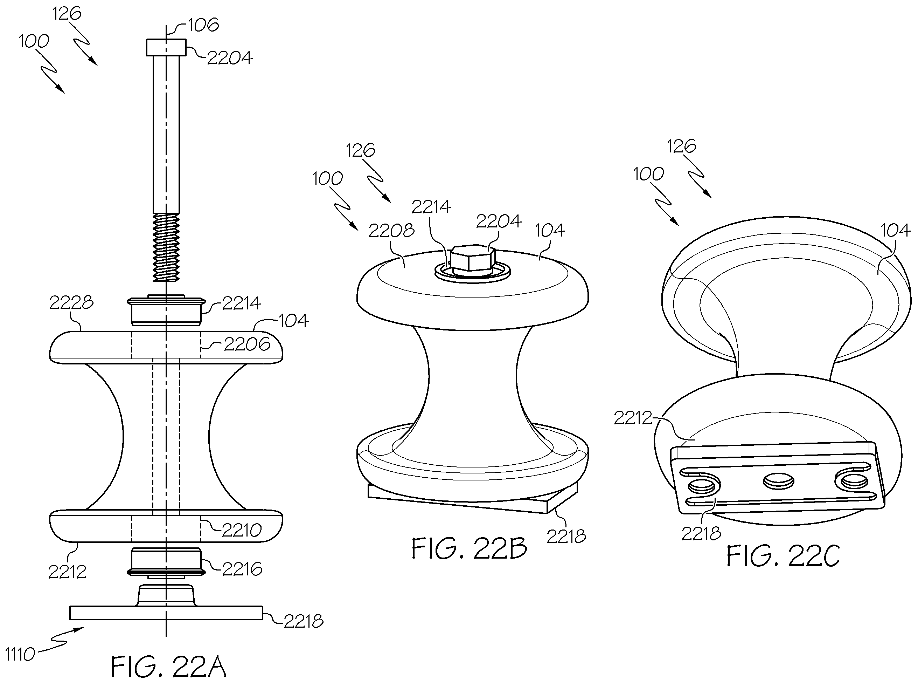

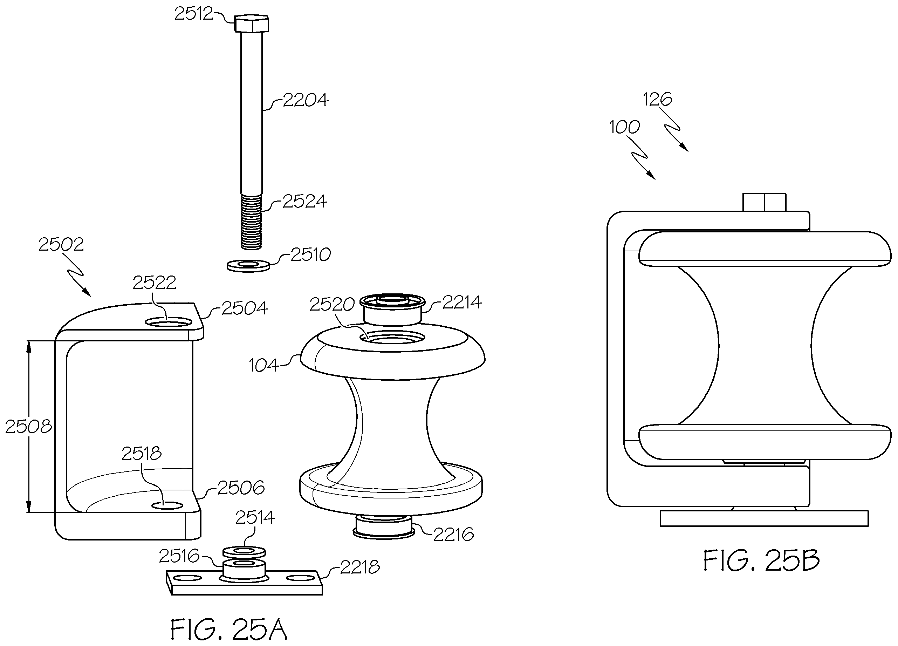

Fig. 12 shows an extension member 1202 for a line management device 100 with a truncated main body 902. Fig. 13A shows an example of a nested extension member 1304 for installation on a second end portion 120 of a line management device 100. Fig. 13B shows a cross-sectional view of an example of the second end portion 120 of Fig. 13A. Fig. 14 shows an example of a recessed area 1402 in an object 202 of a local environment 200. Fig. 15 shows yet another front view of the line management device 100 of Fig. 1. Fig. 22A shows an exploded view of still another example of a line management device 100 for guiding local distribution of a utility line 102. Fig. 22B shows a top perspective of the line management device 100 of Fig. 22A. Fig. 22C shows a bottom perspective of the line management device 100 of Fig. 22A. Fig. 25A shows an exploded view of still yet another example of a line management device 100 for guiding local distribution of a utility line 102. Fig. 25B shows the line management device 100 of Fig. 25A in assembled form.

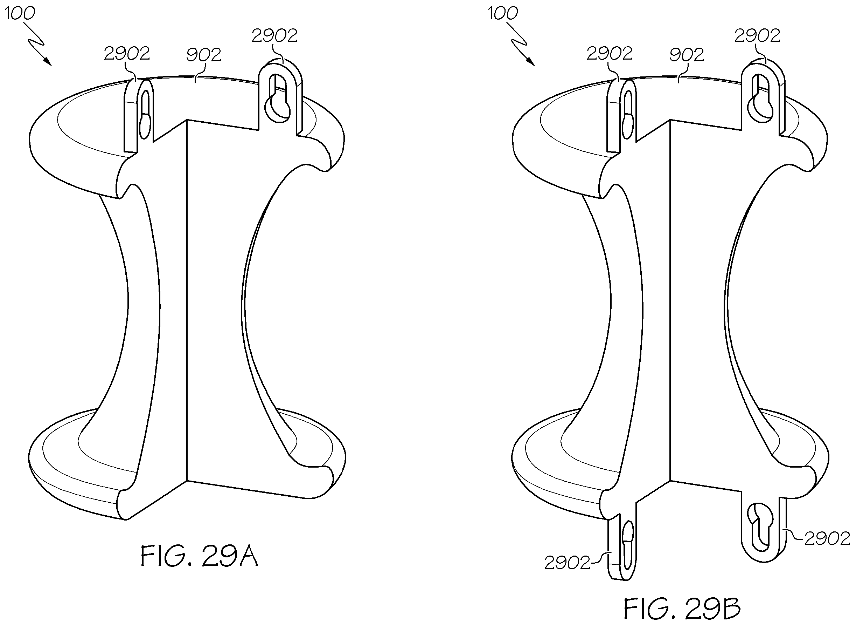

With reference again to Figs. 1-3, 4A-C, 5-7, 8A-B, 9, 10A-C, 11A-C, 12, 13A-B, 14, 15, 22A-C and 25A-B and 29A-B, in one or more examples, a line management device 100 for guiding local distribution of a utility line 102 includes a main body 104 with a central axis 106. The main body 104 includes a middle portion 108, a first end portion 116 and a second end portion 120. The middle portion 108 intersecting the central axis 106 and including a first end 110, a second end 112 and a contoured surface 114 extending between the first end 110 and the second end 112. The contoured surface 114 having a contour to direct the utility line 102 in relation to an object 202 in a local environment 200. The first end portion 116 intersecting the central axis 106, abutting the first end 110 of the middle portion 108 and including a first exterior surface 118. The first exterior surface 118 is shaped to direct the utility line 102 toward the middle portion 108 and to obstruct the utility line 102 from passing over the first end portion 116 and outside the main body 104. The second end portion 120 intersecting the central axis 106, abutting the second end 112 of the middle portion 108 and including a second exterior surface 122. The second exterior surface 122 is shaped to direct the utility line 102 toward the middle portion 108 and to obstruct the utility line 102 from passing over the second end portion 120 and outside the main body 104.

In another example of the line management device 100, the utility line 102 includes an electrical cord, an electrical cable, a fiber optic cable, an Ethernet cable, a coaxial cable, an electrical wire, a wire harness, a flexible conduit, a pressurized air line, a pressurized air hose, a pneumatic line, a pneumatic hose, a vacuum line, a dust collection hose, a flexible air duct, a flexible water pipe, a flexible water line, a flexible drain pipe, a flexible drain line, a hydraulic line, a pressurized hydraulic line or any other suitable utility line in any suitable combination. In yet another example of the line management device 100, the main body 104 includes a monolithic main body. In still another example of the line management device 100, the main body 104 includes a thermoset material, a thermoplastic material, a polycarbonate material, a polymethyl methacrylate material, a polyethylene terephthalate glycol material, a polyvinyl chloride material, an acrylonitrile butadiene styrene material, a polytetrafluoroethylene material, a nylon material, a polylactic acid material or any other suitable material in any suitable combination.

In still yet another example of the line management device 100, the main body 104 is fabricated using an injection molding process, a compression molding process, a thermoforming process, an additive manufacturing process, a three-dimensional printing process, a computer numerical control machining process, a plastic casting process or any other suitable fabrication process in any suitable combination. In another example of the line management device 100, the object 202 in the local environment 200 includes an end of a wing panel for a cubicle, a top of a panel for a cubicle, a wall of a wing panel for a cubicle, a face of a door, a wall, a floor, a half wall, a step, a window, a substrate or any other suitable object in any suitable combination. In yet another example of the line management device 100, the local environment 200 includes a commercial building, a business office, a cubicle area, a residential building, a living area, an area through which utility lines are distributed, a commercial vehicle in which utility lines are distributed, a personal vehicle in which utility lines are distributed or any other suitable local environment in any suitable combination.

In still another example of the line management device 100, the contoured surface 114 of the middle portion 108 of the main body 104 includes a low friction coating 124 configured to facilitate pulling the utility line 102 across the contoured surface 114. In a further example, the low friction coating 124 includes a polytetrafluoroethylene coating, a silicone coating, a ceramic coating or any other suitable low friction coating in any suitable combination. In still yet another example of the line management device 100, the middle portion 108 of the main body 104 includes at least one bearing 302 embedded in the contoured surface 114 and circumferentially spaced apart around the contoured surface 114 to facilitate pulling the utility line 102 across the contoured surface 114. In a further example, the at least one bearing 302 includes a needle bearing, a needle roller bearing, a caged needle bearing, a roller bearing or any other suitable bearing in any suitable combination.

In another example of the line management device 100, the main body 104 includes a through bore 2202 along the central axis 106 configured to receive a bolt 2204. The through bore 2202 includes a first counterbore 2206 at a top surface 2208 of the main body 104 and a second counterbore 2210 at a bottom surface 2212 of the main body 104. In this example, the line management device 100 also includes a first radial ball bearing 2214, a second radial ball bearing 2216 and a mounting plate 2218. The first radial ball bearing 2214 secured in the first counterbore 2206 and configured to receive the bolt 2204. The second radial ball bearing 2216 secured in the second counterbore 2210 and configured to receive the bolt 2204. The mounting plate 2218 configured for mounting on a substrate 1110 and for engagement by the bolt 2204 to support the second radial ball bearing 2216 and thereby support the line management device 100. In a further example, the line management device 100 also includes a retaining bracket 2502, a first thrust bearing 2510 and a second thrust bearing 2514. The retaining bracket 2502 includes a first arm 2504, a second arm 2506 and a retaining member 2508 extending between the first arm 2504 and the second arm 2506 and radially covering a portion of the main body 104 to retain the utility line 102. The first arm 2504 covering the first radial ball bearing 2214 and configured to receive the bolt 2204. The second arm 2506 covers the second radial ball bearing 2216 and configured to receive the bolt 2204. The first thrust bearing 2510 configured to receive the bolt 2204 and disposed between a head 2512 of the bolt 2204 and the first arm 2504 of the retaining bracket 2502. The second thrust bearing 2514 configured to receive the bolt 2204 and disposed between the second arm 2506 of the retaining bracket 2502 and the mounting plate 2218.

In yet another example, the line management device 100 also includes an attaching mechanism 402 configured to secure the main body 104 to the object 202 in the local environment 200. In a further example, the attaching mechanism 402 includes one or more magnets 404, one or more zip ties, one or more hook and loop fasteners, one or more suction cup mounts, an adhesive, one or more pieces of double stick tape, one or more mounting tabs 2902 or any other suitable attaching mechanism in any suitable combination. In another further example, the attaching mechanism 402 includes one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets, one or more manganese aluminum gallium magnets or any other suitable type of magnet in any suitable combination. In yet another further example, the attaching mechanism 402 includes a flange 406 secured to the main body 104 and configured to secure the line management device 100 in relation to the object 202 in the local environment 200. In still another further example, the attaching mechanism 402 includes a mounting plate 408 secured to the object 202 in the local environment 200. In this example, the main body 104 is secured to the mounting plate 408.

In still another example, the line management device 100, also includes an installation/removal mechanism 410 affixed to the main body 104 to facilitate installation and removal of the line management device 100 in relation to the object 202 in the local environment 200. In a further example, the installation/removal mechanism 410 includes a magnet 404. In an even further example, the magnet 404 includes a neodymium magnet, a tetrataenite magnet, a dysprosium magnet, an ytterbium magnet, a cerium magnet, a samarium magnet, an iron nitride magnet, a manganese aluminum carbon magnet, a manganese aluminum gallium magnet or any other suitable type of magnet in any suitable combination. In another further example, the installation/removal mechanism 410 includes a gripping mechanism, an eyelet screw, a hook screw, a grab handle or any other suitable installation/removal mechanism in any suitable combination.

In still yet another example of the line management device 100, the first end portion 116 of the main body 104 is shaped like a mushroom cap 502 with a varying first diameter 504 that intersects the central axis 106. The middle portion 108 of the main body 104 is defined by a varying second diameter 506 that intersects the central axis 106. The contoured surface 114 of the middle portion 108 being concave shaped along the central axis 106 such that the varying second diameter 506 at the first end 110 of the middle portion 108 smoothly transitions to abut with the varying first diameter 504 of the first end portion 116. The varying second diameter 506 at the second end 112 of the middle portion 108 smoothly transitions to abut with the second end portion 120 and the varying second diameter 506 is smallest between the first end 110 and the second end 112 of the middle portion 108. The second end portion 120 of the main body 104 includes a base 508 with a varying third diameter 510 that intersects the central axis 106 and decreases from a wider diameter 512 to a thinner diameter that smoothly transitions to abut with the varying second diameter 506 at the second end 112 of the middle portion 108. In this example, the varying first diameter 504 of the first end portion 116 is greater than the varying third diameter 510 of the second end portion 120 and the varying third diameter 510 is greater than the varying second diameter 506 of the middle portion 108. In a further example, the first end portion 116 that is shaped like the mushroom cap 502 includes an overhang 602 at an outer perimeter 514 proximate the middle portion 108 of the main body 104. The overhang 602 forming a channel 604 to obstruct the utility line 102 from passing over the first end portion 116. In another further example, the wider diameter 512 of the second end portion 120 obstructs the utility line 102 from passing over the first end portion 116.

In another example of the line management device 100, the first end portion 116 of the main body 104 includes a first thickness 702 with a first diameter 704 that intersects the central axis 106. The middle portion 108 of the main body 104 is defined by a varying second diameter 706 that intersects the central axis 106. The contoured surface 114 of the middle portion 108 being concave shaped along the central axis 106 such that the varying second diameter 706 at the first end 110 of the middle portion 108 smoothly transitions to abut with the first diameter 704 of the first end portion 116. The varying second diameter 706 at the second end 112 of the middle portion 108 smoothly transitions to abut with the second end portion 120 and the varying second diameter 706 is smallest between the first end 110 and the second end 112 of the middle portion 108. The second end portion 120 of the main body 104 includes a second thickness 708 with a third diameter 710 that intersects the central axis 106 and smoothly transitions to abut with the varying second diameter 706 at the second end 112 of the middle portion 108. In this example, the first diameter 704 of the first end portion 116 is greater than the varying second diameter 706 of the middle portion 108 and the third diameter 710 is greater than the varying second diameter 706 of the middle portion 108. In a further example, the line management device 100 is symmetrical in relation to a midpoint 712 of the middle portion 108 along the central axis 106. In another further example, the first end portion 116 includes an overhang 802 at an outer perimeter 714 proximate the middle portion 108 of the main body 104. The overhang 802 forming a channel 804 to obstruct the utility line 102 from passing over the first end portion 116. In yet another further example, the second end portion 120 includes an overhang 806 at an outer perimeter 716 proximate the middle portion 108 of the main body 104. The overhang 806 forming a channel 808 to obstruct the utility line 102 from passing over the second end portion 120.

In yet another example of the line management device 100, the main body 104 includes a truncated main body 902 in which a wedge 904 along the central axis 106 is truncated from a periphery 906 toward a center 908 of the main body 104. The wedge 904 forms a first truncated surface 910 in the first end portion 116, a second truncated surface 912 in the middle portion 108 and a third truncated surface 914 in the second end portion 120. The first truncated surface 910, the second truncated surface 912 and the third truncated surface 914 configured to mate with the object 202 in the local environment 200. In a further example, the object 202 in the local environment 200 includes an end of a wing panel for a cubicle, a top of a panel for a cubicle, a corner on a vertical edge of a door, a corner on a top edge of the door, a corner on a door frame of an open door, a leg of the object, a wheel of a mobile object, an outer corner of a wall, an outer corner of a half wall, a corner of a step, a corner of a pass through-like opening in a wall, a corner of a window sill, a corner of a window casing or any other suitable object in any suitable combination.

In another further example, the wedge 904 truncated from the main body 104 includes a wedge ranging from approximately 10 degrees to approximately 45 degrees, a wedge ranging from approximately 45 degrees to approximately 90 degrees, an approximately 90 degree wedge, a wedge ranging from approximately 90 degrees to approximately 135 degrees, a wedge ranging from approximately 135 degrees to approximately 157.5 degrees, a wedge ranging from approximately 137.5 degrees to approximately 180 degrees or a truncation of any other suitable size or shape in any suitable combination. In yet another further example, the line management device 100 also includes an attaching mechanism 916 configured to secure the truncated main body 902 to the object 202 in the local environment 200.

In an even yet further example, the attaching mechanism 916 includes one or more magnets 404, one or more zip ties, one or more hook and loop fasteners, one or more suction cup mounts, an adhesive, one or more pieces of double stick tape, one or more mounting tabs 2902 or any other suitable attaching mechanism in any suitable combination. In another even yet further example, the attaching mechanism 916 includes one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets, one or more manganese aluminum gallium magnets or any other suitable type of magnet in any suitable combination. In yet another even yet further example, the attaching mechanism 916 includes a flange 1002 secured to the truncated main body 902 and configured to secure the line management device 100 in relation to the object 202 in the local environment 200. In still another even yet further example, the attaching mechanism 916 includes a mounting plate 1004 secured to the object 202 in the local environment 200. In this example, the truncated main body 902 is secured to the mounting plate 1004.

In still another further example, the second end portion 120 of the truncated main body 902 also includes an interior end 918, an exterior end 920 and a retaining lip 1102. The interior end 918 abutting the second end 112 of the middle portion 108. The exterior end 920 spaced from the interior end 918 along the central axis 106 by the third truncated surface 914. The retaining lip 1102 extending from the third truncated surface 914 at the exterior end 920. The retaining lip 1102 having a thickness 1104 along the central axis 106 and a length 1106 from the third truncated surface 914 into an area defined by the wedge 904. The thickness 1104 and the length 1106 of the retaining lip 1102 are sized to retain the line management device 100 in relation to the object 202 in the local environment 200.

In an even further example, the retaining lip 1102 is configured to fit a gap 1108 between the object 202 and a substrate 1110 in the local environment 200 where the object 202 is spaced away from the substrate 1110 by a support member 1112. In another even further example, the line management device 100 also includes an extension member 1202 at least temporarily attached to the exterior end 920 of the second end portion 120 such that the retaining lip 1102 in combination with the extension member 1202 is configured to fit a gap 1108 between the object 202 and a substrate 1110 in the local environment 200 where the object 202 is spaced away from the substrate 1110 by a support member 1112. In an even yet further example, the line management device 100 also includes a fastening mechanism 1204 configured to at least temporarily attach the extension member 1202 to the exterior end 920 of the second end portion 120. In yet another even further example, the retaining lip 1102 is configured to mate with a recessed area 1402 in the object 202.

In still yet another further example, the second end portion 120 of the truncated main body 902 also includes an interior end 918, an exterior end 920 and a retaining lip 1102. The interior end 918 abutting the second end 112 of the middle portion 108. The exterior end 920 spaced from the interior end 918 along the central axis 106 by the third truncated surface 914. The retaining lip 1102 extending from the third truncated surface 914 proximate the exterior end 920 to the second exterior surface 122. The retaining lip 1102 having a thickness 1104 along the central axis 106. The retaining lip 1102 being adjacent to an area defined by the wedge 904. The thickness 1104 of the retaining lip 1102 sized to retain the line management device 100 in relation to the object 202 in the local environment 200.

In an even further example, the second end portion 120 of the main body 104 includes a threaded bore 1302 along the central axis 106. In this example, the line management device 100 also includes a nested extension member 1304 and a compression spring 1312. The nested extension member 1304 includes an outer wall 1306, a base portion 1308 and a threaded stud 1310. The outer wall 1306 configured to fit over the exterior end 920 of the second end portion 120 in response to turning the threaded stud 1310 into the threaded bore 1302 by rotating the nested extension member 1304. The compression spring 1312 is placed on the threaded stud 1310 to apply a compression force to the nested extension member 1304 as the threaded stud 1310 is turned into the threaded bore 1302. In an even yet further example, the compression force facilitates retention of the nested extension member 1304 at a desired spacing between the base portion 1308 and the exterior end 920 of the second end portion 120. The desired spacing being adjustable between a minimum spacing and a maximum spacing to an adjusted spacing that mates with a recessed area 1402 in the object 202.

In still another example, the line management device 100 also includes a scalable length 1502 along the central axis 106 and a scalable width 1504 perpendicular to the central axis 106. In a further example, the scalable length 1502 ranges from approximately three inches to approximately twelve inches. In another further example, the scalable width 1504 ranges from approximately two inches to approximately six inches.

Referring generally to Figs. 1-3, 4A-C, 5-7, 8A-B, 9, 10A-C, 11A-C, 12, 13A-B, 14- 21, 22A-C,23, 24, 25A-Band 26, by way of examples, the present disclosure is directed to a method 1600, 1800, 1900 for guiding local distribution of a utility line 102. Fig. 1 shows an example of a line management device 100 for guiding local distribution of a utility line 102. Fig. 2 shows an example of a local environment 200 in which two line management devices 100 of Fig. 1 and a utility line 102 are placed in relation to an object 202 in the local environment 200. Fig. 3 shows another example of a line management device 100 for guiding local distribution of a utility line 102. Fig. 4A shows a bottom view of yet another example of a line management device 100 for guiding local distribution of a utility line 102. Fig. 4B shows a top view of still another example of a line management device 100 for guiding local distribution of a utility line102. Fig. 4C shows an example of a mounting plate 408 used to attach still yet another example of a line management device 100 in another example of a local environment 200. Fig. 5 shows still yet another example of a line management device 100 for guiding local distribution of a utility line 102.

Fig. 6 shows an example of a first end portion 116 of the line management device 100 of Fig. 5. Fig. 7 shows another front view of the line management device 100 of Fig. 1. Fig. 8A shows an example of a first end portion 116 of the line management device 100 of Fig. 7. Fig. 8B shows an example of a second end portion 120 of the line management device 100 of Fig. 7. Fig. 9 shows an example of a truncated main body 902 for a line management device 100. Fig. 10A shows a bottom view of another example of a truncated main body 902 for a line management device 100. Fig. 10B shows a top view of yet another example of a truncated main body 902 for a line management device 100. Fig. 10C shows a top view of an example of a mounting plate 1004 used to attach a truncated main body 902 for a line management device 100 in a local environment 200. Fig. 11A shows another example of a second end portion 120 with an example of a retaining lip 1102 for a truncated main body 902. Fig. 11B shows a sectional view of another example of an object 202 in yet another example of a local environment 200. Fig. 11C shows yet another example of a second end portion 120 with another example of a retaining lip 1102 for a truncated main body 902. Fig. 12 shows an extension member 1202 for a line management device 100 with a truncated main body 902. Fig. 13A shows an example of a nested extension member 1304 for installation on a second end portion 120 of a line management device 100. Fig. 13B shows a cross-sectional view of an example of the second end portion 120 of Fig. 13A. Fig. 14 shows an example of a recessed area 1402 in an object 202 of a local environment 200. Fig. 15 shows yet another front view of the line management device 100 of Fig. 1.

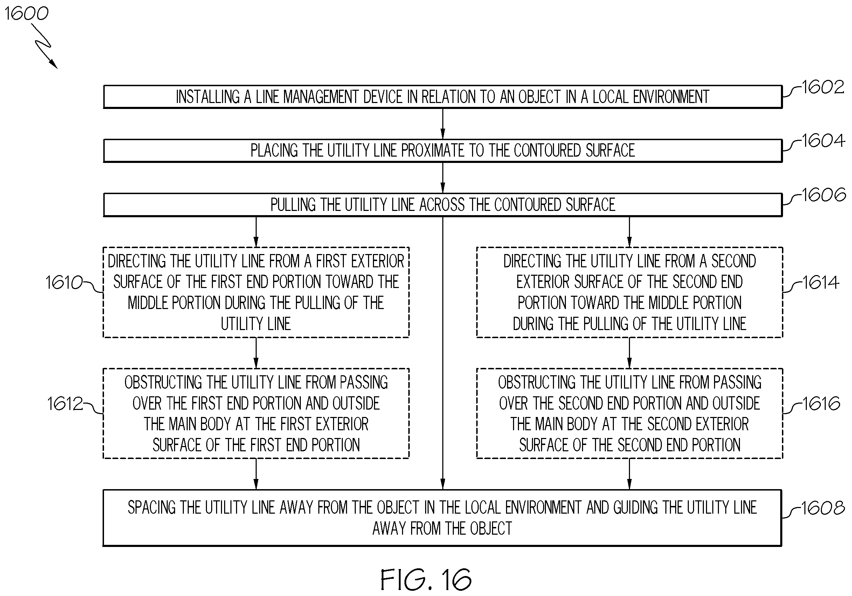

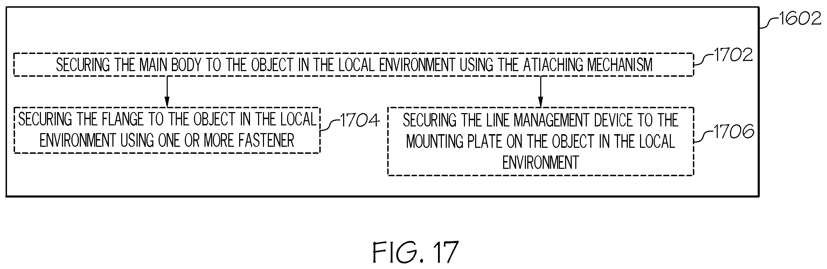

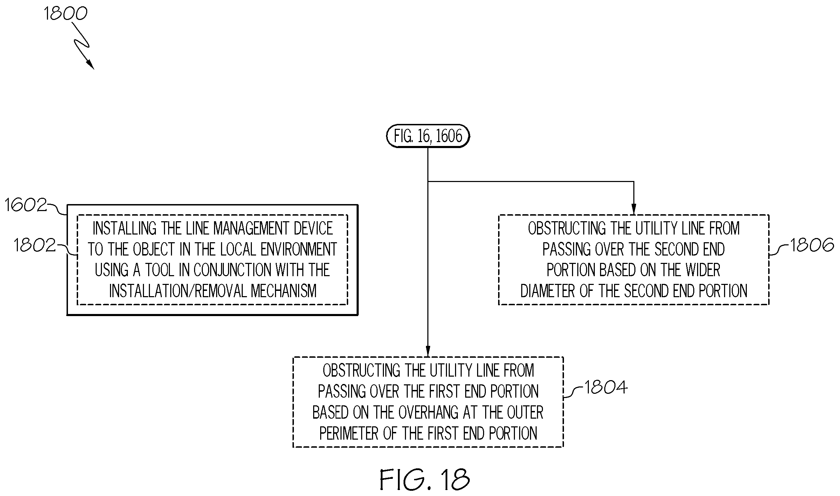

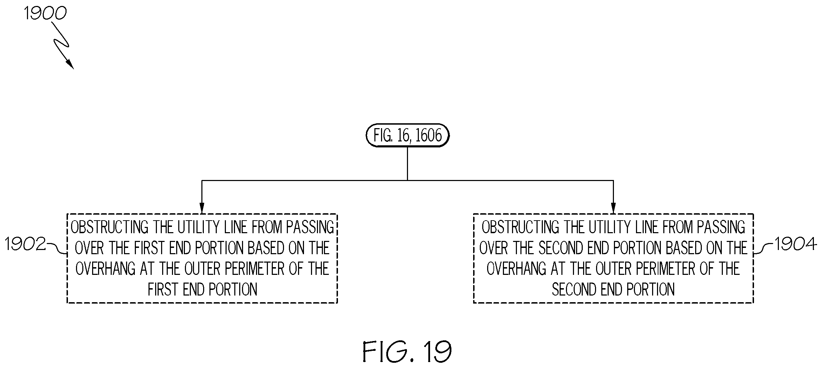

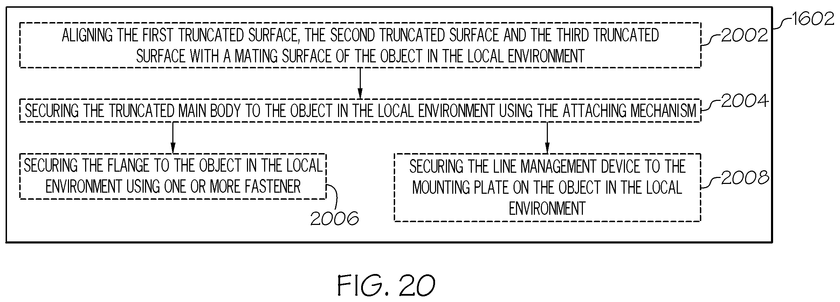

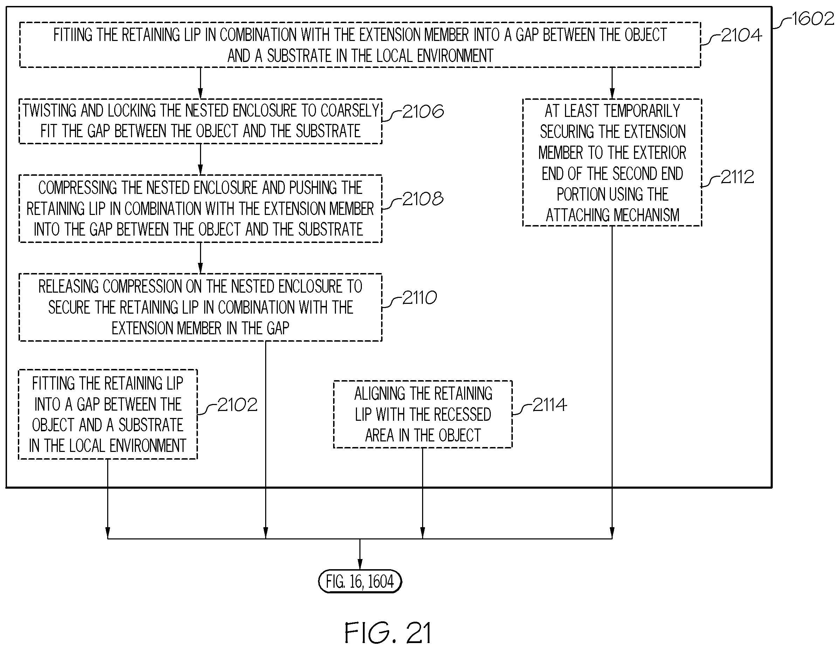

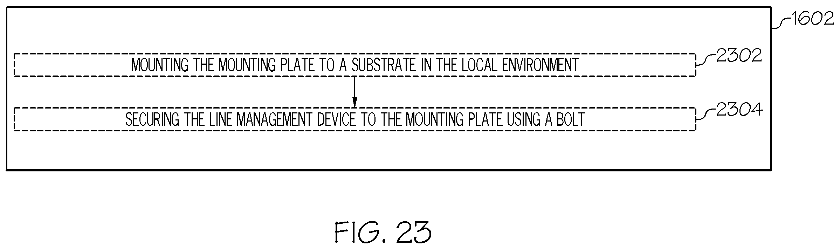

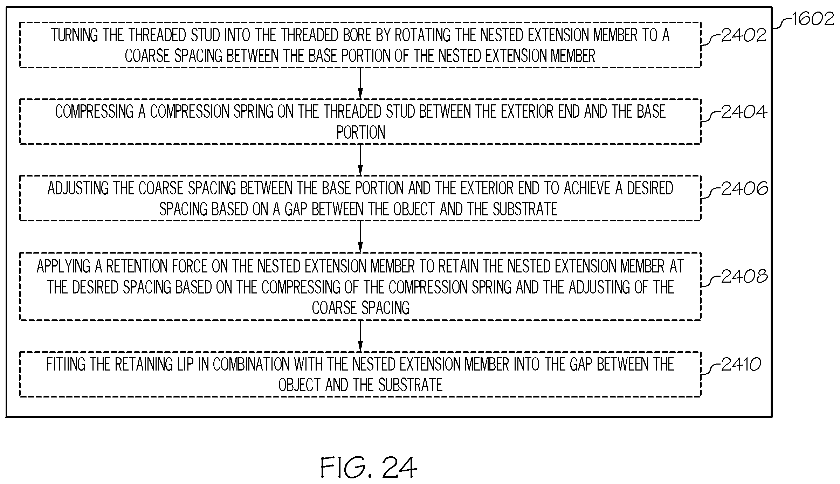

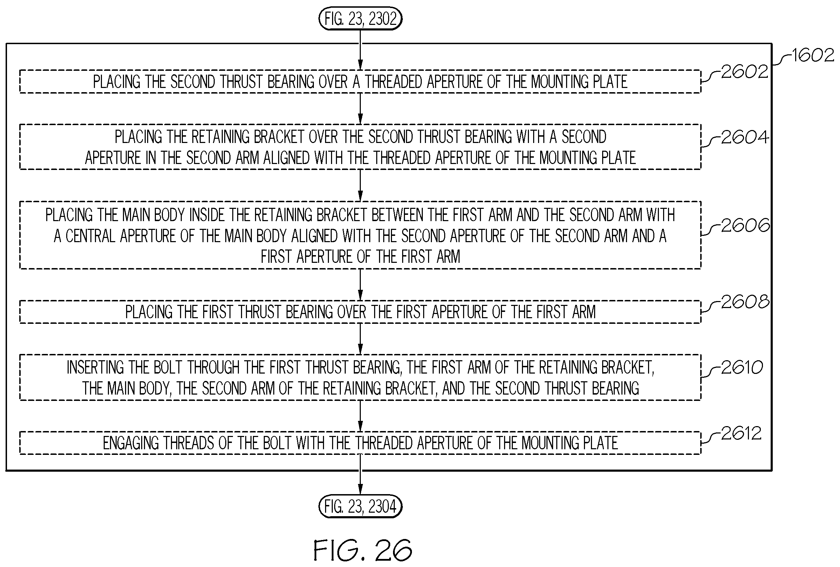

Fig. 16 provides an example of the method 1600 for guiding local distribution of a utility line 102. Fig. 17 provides an example of the installing 1602 of the line management device 100 in the method 1600 of Fig. 16. Fig. 18, in combination with Fig. 16, provides an example of the method 1800 for guiding local distribution of a utility line 102 and another example of the installing 1602 of the line management device 100 in the method 1600 of Fig. 16. Fig. 19, in combination with Fig. 16, provides an example of the method 1900 for guiding local distribution of a utility line 102. Fig. 20 provides yet another example of the installing 1602 of the line management device 100 in the method 1600 of Fig. 16. Fig. 21 provides still another example of the installing 1602 of the line management device 100 in the method 1600 of Fig. 16. Fig. 22A shows an exploded view of still another example of a line management device 100 for guiding local distribution of a utility line 102. Fig. 22B shows a top perspective of the line management device 100 of Fig. 22A. Fig. 22C shows a bottom perspective of the line management device 100 of Fig. 22A. Fig. 23 provides still yet another example of the installing 1602 of the line management device 100 in the method 1600 of Fig. 16. Fig. 24 provides another example of the installing 1602 of the line management device 100 in the method 1600 of Fig. 16. Fig. 25A shows an exploded view of still yet another example of a line management device 100 for guiding local distribution of a utility line 102. Fig. 25B shows the line management device 100 of Fig. 25A in assembled form. Fig. 26, in combination with Fig. 23, provides yet another example of the installing 1602 of the line management device 100 in the method 1600 of Fig. 16.

With reference again to Figs. 1-3, 4A-C, 16, 17, 22A-C, 23, 25A-B and 26, in one or more examples, a method 1600 (see Fig. 16) for guiding local distribution of a utility line 102 includes installing 1602 a line management device 100 in relation to an object 202 in a local environment 200. The line management device 100 includes a main body 104 with a middle portion 108, a first end portion 116 and a second end portion 120. The middle portion 108 having a contoured surface 114 extending between a first end 110 and a second end 112. The first end portion 116 abutting the first end 110 of the middle portion 108. The second end portion 120 abutting the second end 112 of the middle portion 108. At 1604, the utility line 102 is placed proximate to the contoured surface 114. At 1606, the utility line 102 is pulled across the contoured surface 114. At 1608, the utility line 102 is spaced away from the object 202 in the local environment 200 and guided away from the object 202. In another example, the method 1600 also includes directing 1610 the utility line 102 from a first exterior surface 118 of the first end portion 116 toward the middle portion 108 during the pulling 1606 of the utility line 102. At 1612, the utility line 102 is obstructed from passing over the first end portion 116 and outside the main body 104 at the first exterior surface 118 of the first end portion 116. In yet another example, the method 1600 also includes directing 1614 the utility line 102 from a second exterior surface 122 of the second end portion 120 toward the middle portion 108 during the pulling 1606 of the utility line 102. At 1616, the utility line 102 is obstructed from passing over the second end portion 120 and outside the main body 104 at the second exterior surface 122 of the second end portion 120.

In still another example of the method 1600, the utility line 102 includes an electrical cord, an electrical cable, a fiber optic cable, an Ethernet cable, a coaxial cable, an electrical wire, a wire harness, a flexible conduit, a pressurized air line, a pressurized air hose, a pneumatic line, a pneumatic hose, a vacuum line, a dust collection hose, a flexible air duct, a flexible water pipe, a flexible water line, a flexible drain pipe, a flexible drain line, a hydraulic line, a pressurized hydraulic line or any other suitable utility line in any suitable combination. In still yet another example of the method 1600, the object 202 in the local environment 200 includes an end of a wing panel for a cubicle, a top of a panel for a cubicle, a wall of a wing panel for a cubicle, a face of a door, a wall, a floor, a half wall, a step, a window, a substrate or any other suitable object in any suitable combination. In another example of the method 1600, the local environment 200 includes a commercial building, a business office, a cubicle area, a residential building, a living area, an area through which utility lines are distributed, a commercial vehicle in which utility lines are distributed, a personal vehicle in which utility lines are distributed or any other suitable local environment in any suitable combination.

In yet another example of the method 1600, the contoured surface 114 of the middle portion 108 of the main body 104 includes a low friction coating 124 to facilitate the pulling 1606 of the utility line 102 across the contoured surface 114. In still another example of the method 1600, the middle portion 108 of the main body 104 includes at least one bearing 302 embedded in the contoured surface 114 and circumferentially spaced apart around the contoured surface 114 to facilitate the pulling 1606 of the utility line 102 across the contoured surface 114. In still yet another example of the method 1600, the line management device 100 includes a mounting plate 2218. In this example, the installing 1602 of the line management device 100 also includes mounting 2302 (see Fig. 23) the mounting plate 2218 to a substrate 1110 in the local environment 200. At 2304, the line management device 100 is secured to the mounting plate 2218 using a bolt 2204.

In a further example, the main body 104 includes a through bore 2202 along the central axis 106 configured to receive the bolt 2204. The through bore 2202 includes a first counterbore 2206 at a top surface 2208 of the main body 104 and a second counterbore 2210 at a bottom surface 2212 of the main body 104. The line management device 100 includes a first radial ball bearing 2214 secured in the first counterbore 2206 and configured to receive the bolt 2204 and a second radial ball bearing 2216 secured in the second counterbore 2210 and configured to receive the bolt 2204. The first radial ball bearing 2214 and the second radial ball bearing 2216 facilitate the pulling 1606 of the utility line 102 across the contoured surface 114.

In another further example, the line management device 100 includes a retaining bracket 2502, a first thrust bearing 2510 and a second thrust bearing 2514. The retaining bracket 2502 includes a first arm 2504, a second arm 2506 and a retaining member 2508 extending between the first arm 2504 and the second arm 2506 and radially covering a portion of the main body 104 to retain the utility line 102. In this example, the installing 1602 of the line management device 100 also includes placing 2602 (see Fig. 26) the second thrust bearing 2514 over a threaded aperture 2516 of the mounting plate 2218. At 2604, the retaining bracket 2502 is placed over the second thrust bearing 2514 with a second aperture 2518 in the second arm 2506 aligned with the threaded aperture 2516 of the mounting plate 2218. At 2606, the main body 104 is placed inside the retaining bracket 2502 between the first arm 2504 and the second arm 2506 with a central aperture 2520 of the main body 104 aligned with the second aperture 2518 of the second arm 2506 and a first aperture 2522 of the first arm 2504. At 2608, the first thrust bearing 2510 is placed over the first aperture 2522 of the first arm 2504. At 2610, the bolt 2204 is inserted through the first thrust bearing 2510, the first arm 2504 of the retaining bracket 2502, the main body 104, the second arm 2506 of the retaining bracket 2502, and the second thrust bearing 2514. At 2612, threads 2524 of the bolt 2204 are engaged with the threaded aperture 2516 of the mounting plate 2218.

In another example of the method 1600, the line management device 100 also includes an attaching mechanism 402. In this example, the installing 1602 of the line management device 100 includes securing 1702 (see Fig. 17) the main body 104 to the object 202 in the local environment 200 using the attaching mechanism 402. In a further example, the attaching mechanism 402 includes one or more magnets 404, one or more zip ties, one or more hook and loop fasteners, one or more suction cup mounts, an adhesive, one or more pieces of double stick tape, one or more mounting tabs 2902 or any other suitable attaching mechanism in any suitable combination. In another further example, the attaching mechanism 402 includes one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets, one or more manganese aluminum gallium magnets or any other suitable type of magnet in any suitable combination. In yet another further example, the attaching mechanism 402 includes a flange 406 secured to the main body 104. In this example, the installing 1602 of the line management device 100 also includes securing 1704 the flange 406 to the object 202 in the local environment 200 using one or more fastener. In still another further example, the attaching mechanism 402 includes a mounting plate 408 secured to the object 202 in the local environment 200. In this example, the installing 1602 of the line management device 100 also includes securing 1706 the line management device 100 to the mounting plate 408 on the object 202 in the local environment 200.

With reference again to Figs. 1, 2, 4A-C, 5, 16 and 18, in one or more examples, a method 1800 (see Fig. 18) for guiding local distribution of a utility line 102 includes the method 1600 of Fig. 16. In this example, the line management device 100 includes an installation/removal mechanism 410 affixed to the main body 104. The installing 1602 of the line management device 100 includes installing 1802 the line management device 100 to the object 202 in the local environment 200 using a tool in conjunction with the installation/removal mechanism 410. In a further example, the installation/removal mechanism 410 includes a magnet 404. In an even further example, the magnet 404 includes a neodymium magnet, a tetrataenite magnet, a dysprosium magnet, an ytterbium magnet, a cerium magnet, a samarium magnet, an iron nitride magnet, a manganese aluminum carbon magnet, a manganese aluminum gallium magnet or any other suitable type of magnet in any suitable combination. In another further example, the installation/removal mechanism 410 includes a gripping mechanism, an eyelet screw, a hook screw, a grab handle or any other suitable installation or removal mechanism in any suitable combination.

In another example of the method 1800, the first end portion 116 of the main body 104 is shaped like a mushroom cap 502 with a varying first diameter 504 that intersects a central axis 106. The middle portion 108 of the main body 104 is defined by a varying second diameter 506 that intersects the central axis 106. The contoured surface 114 of the middle portion 108 being concave shaped along the central axis 106 such that the varying second diameter 506 at the first end 110 of the middle portion 108 smoothly transitions to abut with the varying first diameter 504 of the first end portion 116. The varying second diameter 506 at the second end 112 of the middle portion 108 smoothly transitions to abut with the second end portion 120 and the varying second diameter 506 is smallest between the first end 110 and the second end 112 of the middle portion 108. The second end portion 120 of the main body 104 includes a base 508 with a varying third diameter 510 that intersects the central axis 106 and decreases from a wider diameter 512 to a thinner diameter that smoothly transitions to abut with the varying second diameter 506 at the second end 112 of the middle portion 108. In this example, the varying first diameter 504 of the first end portion 116 is greater than the varying third diameter 510 of the second end portion 120 and the varying third diameter 510 is greater than the varying second diameter 506 of the middle portion 108.

In a further example, the first end portion 116 that is shaped like the mushroom cap 502 includes an overhang 602 at an outer perimeter 514 proximate the middle portion 108 of the main body 104. In this example, the method 1800 also continues from 1606 of Fig. 16 to 1804 where the utility line 102 is obstructed from passing over the first end portion 116 based on the overhang 602 at the outer perimeter 514 of the first end portion 116. In another further example, the method 1800 also continues from 1606 of Fig. 16 to 1806 where the utility line 102 is obstructed from passing over the second end portion 120 based on the wider diameter 512 of the second end portion 120.

With reference again to Figs. 1, 7, 8A-B, 16 and 19, in one or more examples, a method 1900 (see Fig. 19) for guiding local distribution of a utility line 102 includes the method 1600 of Fig. 16. In this example, the first end portion 116 of the main body 104 includes a first thickness 702 with a first diameter 704 that intersects a central axis 106. The middle portion 108 of the main body 104 is defined by a varying second diameter 706 that intersects the central axis 106. The contoured surface 114 of the middle portion 108 being concave shaped along the central axis 106 such that the varying second diameter 706 at the first end 110 of the middle portion 108 smoothly transitions to abut with the first diameter 704 of the first end portion 116. The varying second diameter 706 at the second end 112 of the middle portion 108 smoothly transitions to abut with the second end portion 120 and the varying second diameter 706 is smallest between the first end 110 and the second end 112 of the middle portion 108. The second end portion 120 of the main body 104 includes a second thickness 708 with a third diameter 710 that intersects the central axis 106 and smoothly transitions to abut with the varying second diameter 706 at the second end 112 of the middle portion 108. In this example, the first diameter 704 of the first end portion 116 is greater than the varying second diameter 706 of the middle portion 108 and the third diameter 710 is greater than the varying second diameter 706 of the middle portion 108.

In a further example, the first end portion 116 includes an overhang 802 at an outer perimeter 714 proximate the middle portion 108 of the main body 104. In this example, the method 1900 continues from 1606 of Fig. 16 to 1902 where the utility line 102 is obstructed from passing over the first end portion 116 based on the overhang 802 at the outer perimeter 714 of the first end portion 116. In another further example, the second end portion 120 includes an overhang 806 at an outer perimeter 716 proximate the middle portion 108 of the main body 104. In this example, the method 1900 continues from 1606 of Fig. 16 to 1904 where the utility line 102 is obstructed from passing over the second end portion 120 based on the overhang 806 at the outer perimeter 716 of the second end portion 120.

With reference again to Figs. 1, 2, 4A-C, 9, 10A-C, 11A-C, 12, 13A-B, 14, 16, 20, 21 and 24, in one or more examples of the method 1600, the main body 104 includes a truncated main body 902 in which a wedge 904 along a central axis 106 is truncated from a periphery 906 toward a center 908 of the main body 104. The wedge 904 forms a first truncated surface 910 in the first end portion 116, a second truncated surface 912 in the middle portion 108 and a third truncated surface 914 in the second end portion 120. In this example, the installing 1602 of the line management device 100 includes aligning 2002 (see Fig. 20) the first truncated surface 910, the second truncated surface 912 and the third truncated surface 914 with a mating surface of the object 202 in the local environment 200.

In another example of the method 1600, the object 202 in the local environment 200 includes an end of a wing panel for a cubicle, a top of a panel for a cubicle, a corner on a vertical edge of a door, a corner on a top edge of the door, a corner on a door frame of an open door, a leg of the object, a wheel of a mobile object, an outer corner of a wall, an outer corner of a half wall, a corner of a step, a corner of a pass through-like opening in a wall, a corner of a window sill, a corner of a window casing or any other suitable object in any suitable combination.

In yet another example of the method 1600, the wedge 904 truncated from the main body 104 includes a wedge ranging from approximately 10 degrees to approximately 45 degrees, a wedge ranging from approximately 45 degrees to approximately 90 degrees, an approximately 90 degree wedge, a wedge ranging from approximately 90 degrees to approximately 135 degrees, a wedge ranging from approximately 135 degrees to approximately 157.5 degrees, a wedge ranging from approximately 137.5 degrees to approximately 180 degrees or a truncation of any other suitable size or shape in any suitable combination. In still another example of the method 1600, the line management device 100 also includes an attaching mechanism 916. In this example, the installing 1602 of the line management device 100 includes securing 2004 the truncated main body 902 to the object 202 in the local environment 200 using the attaching mechanism 916.

In a further example, the attaching mechanism 916 includes one or more magnets 404, one or more zip ties, one or more hook and loop fasteners, one or more suction cup mounts, an adhesive, one or more pieces of double stick tape, one or more mounting tabs 2902 or any other suitable attaching mechanism in any suitable combination. In another further example, the attaching mechanism 916 includes one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets, one or more manganese aluminum gallium magnets or any other suitable type of magnet in any suitable configuration. In yet another further example, the attaching mechanism 916 includes a flange 1002 secured to the truncated main body 902. In this example, the installing 1602 of the line management device 100 also includes securing 2006 the flange 1002 to the object 202 in the local environment 200 using one or more fasteners. In still another further example, the attaching mechanism 916 includes a mounting plate 408 secured to the object 202 in the local environment 200. In this example, the installing 1602 of the line management device 100 also includes securing 2008 the line management device 100 to the mounting plate 408 on the object 202 in the local environment 200.

In still yet another example of the method 1600, the second end portion 120 of the truncated main body 902 also includes an interior end 918, an exterior end 920 and a retaining lip 1102. The interior end 918 abutting the second end 112 of the middle portion 108. The exterior end 920 spaced from the interior end 918 along the central axis 106 by the third truncated surface 914. The retaining lip 1102 extending from the third truncated surface 914 at the exterior end 920. The retaining lip 1102 having a thickness 1104 along the central axis 106 and a length 1106 from the third truncated surface 914 into an area defined by the wedge 904. The thickness 1104 and the length 1106 of the retaining lip 1102 are sized to retain the line management device 100 in relation to the object 202 in the local environment 200. In a further example, the installing 1602 of the line management device 100 including fitting 2102 (see Fig. 21) the retaining lip 1102 into a gap 1108 between the object 202 and a substrate 1110 in the local environment 200. The object 202 being spaced away from the substrate 1110 by a support member 1112.

In another further example, the line management device 100 also includes an extension member 1202 at least temporarily attached to the exterior end 920 of the second end portion 120. In this example, the installing 1602 of the line management device 100 includes fitting 2104 the retaining lip 1102 in combination with the extension member 1202 into a gap 1108 between the object 202 and a substrate 1110 in the local environment 200. The object 202 being spaced away from the substrate 1110 by a support member 1112. In an even further example, the line management device 100 also includes a fastening mechanism 1204. In this example, the installing 1602 of the line management device 100 also includes at least temporarily securing 2112 the extension member 1202 to the exterior end 920 of the second end portion 120 using the fastening mechanism 1204.

In yet another further example, the retaining lip 1102 is configured to mate with a recessed area 1402 in the object 202. In this example, the installing 1602 of the line management device 100 also includes aligning 2114 the retaining lip 1102 with the recessed area 1402 in the object 202. In an even further example, the second end portion 120 of the truncated main body 902 also includes an interior end 918, an exterior end 920 and a retaining lip 1102. The interior end 918 abutting the second end 112 of the middle portion 108. The exterior end 920 spaced from the interior end 918 along the central axis 106 by the third truncated surface 914. The retaining lip 1102 extending from the third truncated surface 914 proximate the exterior end 920 to a second exterior surface 122 of the second end portion 120. The retaining lip 1102 having a thickness 1104 along the central axis 106. The retaining lip 1102 being adjacent to an area defined by the wedge 904. The thickness 1104 of the retaining lip 1102 sized to retain the line management device 100 in relation to the object 202 in the local environment 200.

In another example of the method 1600, the line management device 100 includes a nested extension member 1304 with an outer wall 1306, a base portion 1308 and a threaded stud 1310 that adjustably threads into a threaded bore 1302 along the central axis 106 in the second end portion 120 of the main body 104. In this example, the installing 1602 of the line management device 100 also includes turning 2402 (see Fig. 24) the threaded stud 1310 into the threaded bore 1302 by rotating the nested extension member 1304 to a coarse spacing between the base portion 1308 of the nested extension member 1304 and an exterior end 920 of the second end portion 120. At 2404, a compression spring 1312 is compressed on the threaded stud 1310 between the exterior end 920 of the second end portion 120 and the base portion 1308. At 2406, the coarse spacing between the base portion 1308 and the exterior end 920 is adjusted to achieve a desired spacing based on a gap 1108 between the object 202 and a substrate 1110. The object 202 being spaced away from the substrate 1110 by a support member 1112. At 2408, a retention force is applied on the nested extension member 1304 to retain the nested extension member 1304 at the desired spacing based on the compressing 2404 of the compression spring 1312 and the adjusting 2406 of the coarse spacing. At 2410, a retaining lip 1102 in combination with the nested extension member 1304 is fitted into the gap 1108 between the object 202 and the substrate 1110.

Referring generally to Figs. 1-3, 4A-C, 5-7, 8A-B, 9, 10A-C, 11A-C, 12, 13A-B, 14, 22A-C and 25A-B, by way of examples, the present disclosure is directed to a cable management device 126 for guiding local distribution of an electrical cable 128. Fig. 1 shows an example of a line management device 100 for guiding local distribution of a utility line 102. Fig. 2 shows an example of a local environment 200 in which two line management devices 100 of Fig. 1 and a utility line 102 are placed in relation to an object 202 in the local environment 200. Fig. 3 shows another example of a line management device 100 for guiding local distribution of a utility line 102. Fig. 4A shows a bottom view of yet another example of a line management device 100 for guiding local distribution of a utility line 102. Fig. 4B shows a top view of still another example of a line management device 100 for guiding local distribution of a utility line102. Fig. 4C shows an example of a mounting plate 408 used to attach still yet another example of a line management device 100 in another example of a local environment 200. Fig. 5 shows still yet another example of a line management device 100 for guiding local distribution of a utility line 102.

Fig. 6 shows an example of a first end portion 116 of the line management device 100 of Fig. 5. Fig. 7 shows another front view of the line management device 100 of Fig. 1. Fig. 8A shows an example of a first end portion 116 of the line management device 100 of Fig. 7. Fig. 8B shows an example of a second end portion 120 of the line management device 100 of Fig. 7. Fig. 9 shows an example of a truncated main body 902 for a line management device 100. Fig. 10A shows a bottom view of another example of a truncated main body 902 for a line management device 100. Fig. 10B shows a top view of yet another example of a truncated main body 902 for a line management device 100. Fig. 10C shows a top view of an example of a mounting plate 1004 used to attach a truncated main body 902 for a line management device 100 in a local environment 200. Fig. 11A shows another example of a second end portion 120 with an example of a retaining lip 1102 for a truncated main body 902. Fig. 11B shows a sectional view of another example of an object 202 in yet another example of a local environment 200. Fig. 11C shows yet another example of a second end portion 120 with another example of a retaining lip 1102 for a truncated main body 902.

Fig. 12 shows an extension member 1202 for a line management device 100 with a truncated main body 902. Fig. 13A shows an example of a nested extension member 1304 for installation on a second end portion 120 of a line management device 100. Fig. 13B shows a cross-sectional view of an example of the second end portion 120 of Fig. 13A. Fig. 14 shows an example of a recessed area 1402 in an object 202 of a local environment 200. Fig. 22A shows an exploded view of still another example of a line management device 100 for guiding local distribution of a utility line 102. Fig. 22B shows a top perspective of the line management device 100 of Fig. 22A. Fig. 22C shows a bottom perspective of the line management device 100 of Fig. 22A. Fig. 25A shows an exploded view of still yet another example of a line management device 100 for guiding local distribution of a utility line 102. Fig. 25B shows the line management device 100 of Fig. 25A in assembled form.

With reference again to Figs. 1-3, 4A-C, 5-7, 8A-B, 9, 10A-C, 11A-C, 12, 13A-B, 14, 22A-C and 25A-B, in one or more examples, a cable management device 126 for guiding local distribution of an electrical cable 128 includes a main body 104 and one or more magnets 404. The main body 104 with a central axis 106 and including a middle portion 108, a first end portion 116 and a second end portion 120. The middle portion 108 intersecting the central axis 106 and including a first end 110, a second end 112 and a contoured surface 114 extending between the first end 110 and the second end 112. The contoured surface 114 having a contour to direct the electrical cable 128 in relation to an object 202 in a local environment 200. The first end portion 116 intersecting the central axis 106, abutting the first end 110 of the middle portion 108 and including a first exterior surface 118. The first exterior surface 118 shaped to direct the electrical cable 128 toward the middle portion 108 and to obstruct the electrical cable 128 from passing over the first end portion 116 and outside the main body 104. The second end portion 120 intersecting the central axis 106, abutting the second end 112 of the middle portion 108 and including a second exterior surface 122. The second exterior surface 122 is shaped to direct the electrical cable 128 toward the middle portion 108 and to obstruct the electrical cable 128 from passing over the second end portion 120 and outside the main body 104. The one or more magnets 404 embedded in one or more of the middle portion 108, the first end portion 116 and the second end portion 120. The one or more magnets 404 configured to secure the main body 104 to the object 202 in the local environment 200.

In another example of the cable management device 126, the electrical cable 128 includes an electrical cord, a vacuum cleaner cord, an extension cord, a fiber optic cable, an Ethernet cable, a coaxial cable, a wire harness or any other suitable electrical cable in any suitable combination. In yet another example of the cable management device 126, the contoured surface 114 of the middle portion 108 of the main body 104 including a low friction coating 124 configured to facilitate pulling the electrical cable 128 across the contoured surface 114. In still another example of the cable management device 126, the middle portion 108 of the main body 104 including at least one bearing 302 embedded in the contoured surface 114 and circumferentially spaced apart around the contoured surface 114 to facilitate pulling the electrical cable 128 across the contoured surface 114.

In still yet another example of the cable management device 126, the main body 104 includes a through bore 2202 along the central axis 106 configured to receive a bolt 2204. The through bore 2202 includes a first counterbore 2206 at a top surface 2208 of the main body 104 and a second counterbore 2210 at a bottom surface 2212 of the main body 104. In this example, the cable management device 126 also includes a first radial ball bearing 2214, a second radial ball bearing 2216 and a mounting plate 2218. The first radial ball bearing 2214 secured in the first counterbore 2206 and configured to receive the bolt 2204. The second radial ball bearing 2216 secured in the second counterbore 2210 and configured to receive the bolt 2204. The mounting plate 2218 configured for mounting on a substrate 1110 and for engagement by the bolt 2204 to support the second radial ball bearing 2216 and thereby support the cable management device 126.

In a further example, the cable management device 126 also includes a retaining bracket 2502, a first thrust bearing 2510 and a second thrust bearing 2514. The retaining bracket 2502 includes a first arm 2504, a second arm 2506 and a retaining member 2508 extending between the first arm 2504 and the second arm 2506 and radially covering a portion of the main body 104 to retain the electrical cable 128. The first arm 2504 covering the first radial ball bearing 2214 and configured to receive the bolt 2204. The second arm 2506 covers the second radial ball bearing 2216 and configured to receive the bolt 2204. The first thrust bearing 2510 configured to receive the bolt 2204 and disposed between a head 2512 of the bolt 2204 and the first arm 2504 of the retaining bracket 2502. The second thrust bearing 2514 configured to receive the bolt 2204 and disposed between the second arm 2506 of the retaining bracket 2502 and the mounting plate 2218.

In another example, the cable management device 126 also includes a flange 406 secured to the main body 104 and configured to secure the cable management device 126 in relation to the object 202 in the local environment 200. In yet another example, the cable management device 126 also includes a mounting plate 408 secured to the object 202 in the local environment 200. The main body 104 is secured to the mounting plate 408. In still another example, the cable management device 126 also includes an installation/removal mechanism 410 affixed to the main body 104 to facilitate installation and removal of the cable management device 126 in relation to the object 202 in the local environment 200.

In yet another example of the cable management device 126, the first end portion 116 of the main body 104 is shaped like a mushroom cap 502 with a varying first diameter 504 that intersects the central axis 106. The middle portion 108 of the main body 104 is defined by a varying second diameter 506 that intersects the central axis 106. The contoured surface 114 of the middle portion 108 being concave shaped along the central axis 106 such that the varying second diameter 506 at the first end 110 of the middle portion 108 smoothly transitions to abut with the varying first diameter 504 of the first end portion 116. The varying second diameter 506 at the second end 112 of the middle portion 108 smoothly transitions to abut with the second end portion 120 and the varying second diameter 506 is smallest between the first end 110 and the second end 112 of the middle portion 108. The second end portion 120 of the main body 104 includes a base 508 with a varying third diameter 510 that intersects the central axis 106 and decreases from a wider diameter 512 to a thinner diameter that smoothly transitions to abut with the varying second diameter 506 at the second end 112 of the middle portion 108. In this example, the varying first diameter 504 of the first end portion 116 is greater than the varying third diameter 510 of the second end portion 120 and the varying third diameter 510 is greater than the varying second diameter 506 of the middle portion 108. In a further example, the first end portion 116 that is shaped like the mushroom cap 502 includes an overhang 602 at an outer perimeter 514 proximate the middle portion 108 of the main body 104. The overhang 602 forming a channel 604 to obstruct the electrical cable 128 from passing over the first end portion 116.

In still another example of the cable management device 126, the first end portion 116 of the main body 104 includes a first thickness 702 with a first diameter 704 that intersects the central axis 106. The middle portion 108 of the main body 104 is defined by a varying second diameter 706 that intersects the central axis 106. The contoured surface 114 of the middle portion 108 being concave shaped along the central axis 106 such that the varying second diameter 706 at the first end 110 of the middle portion 108 smoothly transitions to abut with the first diameter 704 of the first end portion 116. The varying second diameter 706 at the second end 112 of the middle portion 108 smoothly transitions to abut with the second end portion 120 and the varying second diameter 706 is smallest between the first end 110 and the second end 112 of the middle portion 108. The second end portion 120 of the main body 104 includes a second thickness 708 with a third diameter 710 that intersects the central axis 106 and smoothly transitions to abut with the varying second diameter 706 at the second end 112 of the middle portion 108. In this example, the first diameter 704 of the first end portion 116 is greater than the varying second diameter 706 of the middle portion 108 and the third diameter 710 is greater than the varying second diameter 706 of the middle portion 108.

In a further example, the cable management device 126 is symmetrical in relation to a midpoint 712 of the middle portion 108 along the central axis 106. In another further example, the first end portion 116 includes an overhang 802 at an outer perimeter 714 proximate the middle portion 108 of the main body 104. The overhang 802 forming a channel 804 to obstruct the electrical cable 128 from passing over the first end portion 116. In yet another further example, the second end portion 120 includes an overhang 806 at an outer perimeter 716 proximate the middle portion 108 of the main body 104. The overhang 806 forms a channel 808 to obstruct the electrical cable 128 from passing over the second end portion 120.

In still yet another example of the cable management device 126, the main body 104 includes a truncated main body 902 in which a wedge 904 along the central axis 106 is truncated from a periphery 906 toward a center 908 of the main body 104. The wedge 904 forms a first truncated surface 910 in the first end portion 116, a second truncated surface 912 in the middle portion 108 and a third truncated surface 914 in the second end portion 120. The first truncated surface 910, the second truncated surface 912 and the third truncated surface 914 configured to mate with the object 202 in the local environment 200. In a further example, the cable management device 126 also includes a flange 1002 secured to the truncated main body 902 and configured to secure the cable management device 126 in relation to the object 202 in the local environment 200. In another further example, the cable management device 126 also includes a mounting plate 408 secured to the object 202 in the local environment 200. The truncated main body 902 is secured to the mounting plate 408.

In yet another further example, the second end portion 120 of the truncated main body 902 also includes an interior end 918, an exterior end 920 and a retaining lip 1102. The interior end 918 abutting the second end 112 of the middle portion 108. The exterior end 920 spaced from the interior end 918 along the central axis 106 by the third truncated surface 914. The retaining lip 1102 extending from the third truncated surface 914 at the exterior end 920. The retaining lip 1102 having a thickness 1104 along the central axis 106 and a length 1106 from the third truncated surface 914 into an area defined by the wedge 904. The thickness 1104 and the length 1106 of the retaining lip 1102 are sized to retain the cable management device 126 in relation to the object 202 in the local environment 200. In an even further example, the cable management device 126 also including an extension member 1202 at least temporarily attached to the exterior end 920 of the second end portion 120 such that the retaining lip 1102 in combination with the extension member 1202 is configured to fit a gap 1108 between the object 202 and a substrate 1110 in the local environment 200 where the object 202 is spaced away from the substrate 1110 by a support member 1112. In an even yet further example, the cable management device 126 also includes a fastening mechanism 1204 configured to at least temporarily attach the extension member 1202 to the exterior end 920 of the second end portion 120.

In still another further example, the second end portion 120 of the truncated main body 902 also includes an interior end 918, an exterior end 920 and a retaining lip 1102. The interior end 918 abutting the second end 112 of the middle portion 108. The exterior end 920 spaced from the interior end 918 along the central axis 106 by the third truncated surface 914. The retaining lip 1102 extending from the third truncated surface 914 proximate the exterior end 920 to the second exterior surface 122. The retaining lip 1102 having a thickness 1104 along the central axis 106. The retaining lip 1102 being adjacent to an area defined by the wedge 904. The thickness 1104 of the retaining lip 1102 sized to retain the cable management device 126 in relation to the object 202 in the local environment 200.

In an even further example, the second end portion 120 of the main body 104 includes a threaded bore 1302 along the central axis 106. In this example, the cable management device 126 includes a nested extension member 1304 and a compression spring 1312. The nested extension member 1304 includes an outer wall 1306, a base portion 1308 and a threaded stud 1310. The outer wall 1306 configured to fit over the exterior end 920 of the second end portion 120 in response to turning the threaded stud 1310 into the threaded bore 1302 by rotating the nested extension member 1304. The compression spring 1312 is placed on the threaded stud 1310 to apply a compression force to the nested extension member 1304 as the threaded stud 1310 is turned into the threaded bore 1302. In an even yet further example, the compression force facilitates retention of the nested extension member 1304 at a desired spacing between the base portion 1308 and the exterior end 920 of the second end portion 120. The desired spacing being adjustable between a minimum spacing and a maximum spacing to an adjusted spacing that mates with a recessed area 1402 in the object 202.

Examples of line management devices 100, cable management devices 126 and methods 1600, 1800, 1900 for guiding local distribution of utility lines 102 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-3, 4A-C, 5-7, 8A-B, 9, 10A-C, 11A-C, 12, 13A-B, 14, 15, 22A-C and 25A-B, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1-3, 4A-C, 5-7, 8A-B, 9, 10A-C, 11A-C, 12, 13A-B, 14, 15, 22A-C and 25A-B, referred to above, need be included in every example and not all elements, features and/or components described herein are necessarily depicted in each illustrative example. Accordingly, some of the elements, features and/or components described and illustrated in Figs. 1-3, 4A-C, 5-7, 8A-B, 9, 10A-C, 11A-C, 12, 13A-B, 14, 15, 22A-C and 25A-B may be combined in various ways without the need to include other features described and illustrated in Figs. 1-3, 4A-C, 5-7, 8A-B, 9, 10A-C, 11A-C, 12, 13A-B, 14, 15, 22A-C and 25A-B, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-3, 4A-C, 5-7, 8A-B, 9, 10A-C, 11A-C, 12, 13A-B, 14, 15, 22A-C and 25A-B, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1-3, 4A-C, 5-7, 8A-B, 9, 10A-C, 11A-C, 12, 13A-B, 14, 15, 22A-C and 25A-B and such elements, features and/or components may not be discussed in detail herein with reference to each of Figs. 1-3, 4A-C, 5-7, 8A-B, 9, 10A-C, 11A-C, 12, 13A-B, 14, 15, 22A-C and 25A-B. Similarly, all elements, features and/or components may not be labeled in each of Figs. 1, 2A-B, 3, 4, 5A-B, 6-9, 10A-B, 11 and 12, but reference numerals associated therewith may be utilized herein for consistency.

In Figs. 16-21, 23, 24 and 26, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 16-21, 23, 24 and 26 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

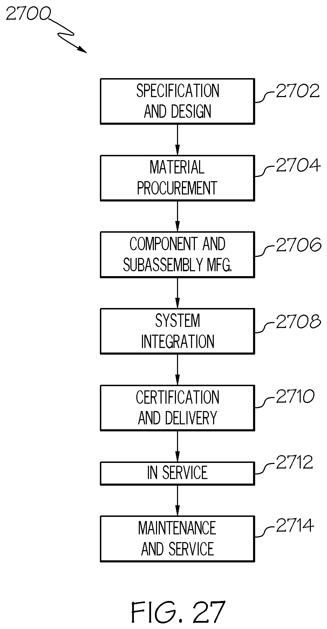

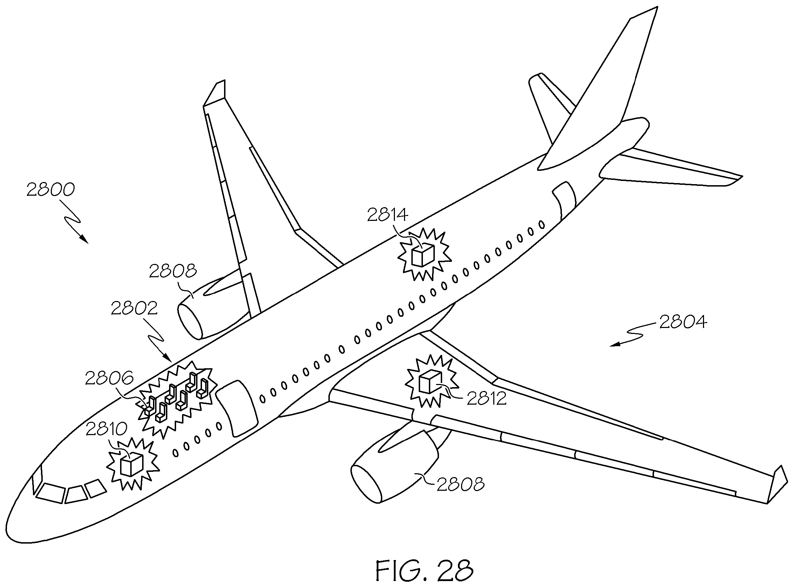

Examples of the subject matter disclosed herein may be described in the context of aircraft manufacturing and service method 2700 as shown in Fig. 27 and aircraft 2800 as shown in Fig. 28. In one or more examples, the disclosed line management devices 100, cable management devices 126 and methods 1600, 1800, 1900 for guiding local distribution of utility lines 102 may be used in aircraft manufacturing. During pre-production, the service method 2700 may include specification and design (block 2702) of aircraft 2800 and material procurement (block 2704). During production, component and subassembly manufacturing (block 2706) and system integration (block 2708) of aircraft 2800 may take place. Thereafter, aircraft 2800 may go through certification and delivery (block 2710) to be placed in service (block 2712). While in service, aircraft 2800 may be scheduled for routine maintenance and service (block 2714). Routine maintenance and service may include modification, reconfiguration, refurbishment, etc. of one or more systems of aircraft 2800.

Each of the processes of the service method 2700 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 28, aircraft 2800 produced by the service method 2700 may include airframe 2802 with a plurality of high-level systems 2804 and interior 2806. Examples of high-level systems 2804 include one or more of propulsion system 2808, electrical system 2810, hydraulic system 2812 and environmental system 2814. Any number of other systems may be included. Although an aerospace example is shown, the principles disclosed herein may be applied to other industries, such as the automotive industry. Accordingly, in addition to aircraft 2800, the principles disclosed herein may apply to other vehicles, e.g., land vehicles, marine vehicles, space vehicles, etc.

The disclosed line management devices 100, cable management devices 126 and methods 1600, 1800, 1900 for guiding local distribution of utility lines 102 may be employed during any one or more of the stages of the manufacturing and service method 2700. For example, components or subassemblies corresponding to component and subassembly manufacturing (block 2706) may be fabricated or manufactured in a manner similar to components or subassemblies produced while aircraft 2800 is in service (block 2712). Also, one or more examples of the system(s), method(s), or combination thereof may be utilized during production stages (block 2706 and block 2708), for example, by substantially expediting assembly of or reducing the cost of aircraft 2800. Similarly, one or more examples of the system or method realizations, or a combination thereof, may be utilized, for example and without limitation, while aircraft 2800 is in service (block 2712) and/or during maintenance and service (block 2714).

Further, the disclosure comprise examples according to the following clauses:
Clause 1. A line management device (100) for guiding local distribution of a utility line (102), comprising: a main body (104) with a central axis (106), the main body (104) comprising: a middle portion (108) intersecting the central axis (106) and comprising a first end (110), a second end (112) and a contoured surface (114) extending between the first end (110) and the second end (112), the contoured surface (114) having a contour to direct the utility line (102) in relation to an object (202) in a local environment (200); a first end portion (116) intersecting the central axis (106), abutting the first end (110) of the middle portion (108) and comprising a first exterior surface (118), the first exterior surface (118) shaped to direct the utility line (102) toward the middle portion (108) and to obstruct the utility line (102) from passing over the first end portion (116) and outside the main body (104); and a second end portion (120) intersecting the central axis (106), abutting the second end (112) of the middle portion (108) and comprising a second exterior surface (122), the second exterior surface (122) shaped to direct the utility line (102) toward the middle portion (108) and to obstruct the utility line (102) from passing over the second end portion (120) and outside the main body (104).
Clause 2. The line management device of Clause 1 wherein the utility line (102) comprises at least one of an electrical cord, an electrical cable, a fiber optic cable, an Ethernet cable, a coaxial cable, an electrical wire, a wire harness, a flexible conduit, a pressurized air line, a pressurized air hose, a pneumatic line, a pneumatic hose, a vacuum line, a dust collection hose, a flexible air duct, a flexible water pipe, a flexible water line, a flexible drain pipe, a flexible drain line, a hydraulic line and a pressurized hydraulic line.
Clause 3. The line management device of Clause 1 wherein the main body (104) comprises a monolithic main body.
Clause 4. The line management device of Clause 1 wherein the main body (104) comprises at least one of a thermoset material, a thermoplastic material, a polycarbonate material, a polymethyl methacrylate material, a polyethylene terephthalate glycol material, a polyvinyl chloride material, an acrylonitrile butadiene styrene material, a polytetrafluoroethylene material, a nylon material and a polylactic acid material.
Clause 5. The line management device of Clause 1 wherein the main body (104) is fabricated using at least one of an injection molding process, a compression molding process, a thermoforming process, an additive manufacturing process, a three-dimensional printing process, a computer numerical control machining process and a plastic casting process.
Clause 6. The line management device of Clause 1 wherein the object (202) in the local environment (200) comprises at least one of an end of a wing panel for a cubicle, a top of a panel for a cubicle, a wall of a wing panel for a cubicle, a face of a door, a wall, a floor, a half wall, a step, a window and a substrate.
Clause 7. The line management device of Clause 1 wherein the local environment (200) comprises a commercial building, a business office, a cubicle area, a residential building, a living area, an area through which utility lines are distributed, a commercial vehicle in which utility lines are distributed and a personal vehicle in which utility lines are distributed.
Clause 8. The line management device of Clause 1, the contoured surface (114) of the middle portion (108) of the main body (104) comprising a low friction coating (124) configured to facilitate pulling the utility line (102) across the contoured surface (114).
Clause 9. The line management device of Clause 8 wherein the low friction coating (124) comprises at least one of a polytetrafluoroethylene coating, a silicone coating and a ceramic coating.
Clause 10. The line management device of Clause 1, the middle portion (108) of the main body (104) comprising at least one bearing (302) embedded in the contoured surface (114) and circumferentially spaced apart around the contoured surface (114) to facilitate pulling the utility line (102) across the contoured surface (114).
Clause 11. The line management device of Clause 10 wherein the at least one bearing (302) comprises at least one of a needle bearing, a needle roller bearing, a caged needle bearing and a roller bearing.
Clause 12. The line management device of Clause 1 wherein the main body (104) comprises a through bore (2202) along the central axis (106) configured to receive a bolt (2204), wherein the through bore (2202) comprises a first counterbore (2206) at a top surface (2208) of the main body (104) and a second counterbore (2210) at a bottom surface (2212) of the main body (104), the line management device (100) further comprising: a first radial ball bearing (2214) secured in the first counterbore (2206) and configured to receive the bolt (2204); a second radial ball bearing (2216) secured in the second counterbore (2210) and configured to receive the bolt (2204); and a mounting plate (2218) configured for mounting on a substrate (1110) and for engagement by the bolt (2204) to support the second radial ball bearing (2216) and thereby support the line management device (100).
Clause 13. The line management device of Clause 12, further comprising: a retaining bracket (2502) comprising a first arm (2504), a second arm (2506) and a retaining member (2508) extending between the first arm (2504) and the second arm (2506) and radially covering a portion of the main body (104) to retain the utility line (102), the first arm (2504) covering the first radial ball bearing (2214) and configured to receive the bolt (2204), the second arm (2506) covering the second radial ball bearing (2216) and configured to receive the bolt (2204); a first thrust bearing (2510) configured to receive the bolt (2204) and disposed between a head (2512) of the bolt (2204) and the first arm (2504) of the retaining bracket (2502); and a second thrust bearing (2514) configured to receive the bolt (2204) and disposed between the second arm (2506) of the retaining bracket (2502) and the mounting plate (2218).
Clause 14. The line management device of Clause 1, further comprising an attaching mechanism (402) configured to secure the main body (104) to the object (202) in the local environment (200).
Clause 15. The line management device of Clause 14 wherein the attaching mechanism (402) comprises at least one of one or more magnets (404), one or more zip ties, one or more hook and loop fasteners, one or more suction cup mounts, an adhesive, one or more pieces of double stick tape and one or more mounting tabs (2902).
Clause 16. The line management device of Clause 14 wherein the attaching mechanism (402) comprises at least one of one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets and one or more manganese aluminum gallium magnets.
Clause 17. The line management device of Clause 14, the attaching mechanism (402) comprising a flange (406) secured to the main body (104) and configured to secure the line management device (100) in relation to the object (202) in the local environment (200).
Clause 18. The line management device of Clause 14, the attaching mechanism (402) comprising a mounting plate (408) secured to the object (202) in the local environment (200), wherein the main body (104) is secured to the mounting plate (408).
Clause 19. The line management device of Clause 1, further comprising an installation/removal mechanism (410) affixed to the main body (104) to facilitate installation and removal of the line management device (100) in relation to the object (202) in the local environment (200).
Clause 20. The line management device of Clause 19 wherein the installation/removal mechanism (410) comprises a magnet (404).
Clause 21. The line management device of Clause 20 wherein the magnet (404) comprises a neodymium magnet, a tetrataenite magnet, a dysprosium magnet, an ytterbium magnet, a cerium magnet, a samarium magnet, an iron nitride magnet, a manganese aluminum carbon magnet and a manganese aluminum gallium magnet.
Clause 22. The line management device of Clause 19 wherein the installation/removal mechanism (410) comprises at least one of a gripping mechanism, an eyelet screw, a hook screw and a grab handle.
Clause 23. The line management device of Clause 1 wherein the first end portion (116) of the main body (104) is shaped like a mushroom cap (502) with a varying first diameter (504) that intersects the central axis (106), and wherein the middle portion (108) of the main body (104) is defined by a varying second diameter (506) that intersects the central axis (106), the contoured surface (114) of the middle portion (108) being concave shaped along the central axis (106) such that the varying second diameter (506) at the first end (110) of the middle portion (108) smoothly transitions to abut with the varying first diameter (504) of the first end portion (116), the varying second diameter (506) at the second end (112) of the middle portion (108) smoothly transitions to abut with the second end portion (120) and the varying second diameter (506) is smallest between the first end (110) and the second end (112) of the middle portion (108), and wherein the second end portion (120) of the main body (104) comprises a base (508) with a varying third diameter (510) that intersects the central axis (106) and decreases from a wider diameter (512) to a thinner diameter that smoothly transitions to abut with the varying second diameter (506) at the second end (112) of the middle portion (108), and wherein the varying first diameter (504) of the first end portion (116) is greater than the varying third diameter (510) of the second end portion (120) and the varying third diameter (510) is greater than the varying second diameter (506) of the middle portion (108).
Clause 24. The line management device of Clause 23 wherein the first end portion (116) that is shaped like the mushroom cap (502) comprises an overhang (602) at an outer perimeter (514) proximate the middle portion (108) of the main body (104), the overhang (602) forming a channel (604) to obstruct the utility line (102) from passing over the first end portion (116).
Clause 25. The line management device of Clause 23 wherein the wider diameter (512) of the second end portion (120) obstructs the utility line (102) from passing over the first end portion (116).
Clause 26. The line management device of Clause 1 wherein the first end portion (116) of the main body (104) comprises a first thickness (702) with a first diameter (704) that intersects the central axis (106), and wherein the middle portion (108) of the main body (104) is defined by a varying second diameter (706) that intersects the central axis (106), the contoured surface (114) of the middle portion (108) being concave shaped along the central axis (106) such that the varying second diameter (706) at the first end (110) of the middle portion (108) smoothly transitions to abut with the first diameter (704) of the first end portion (116), the varying second diameter (706) at the second end (112) of the middle portion (108) smoothly transitions to abut with the second end portion (120) and the varying second diameter (706) is smallest between the first end (110) and the second end (112) of the middle portion (108), and wherein the second end portion (120) of the main body (104) comprises a second thickness (708) with a third diameter (710) that intersects the central axis (106) and smoothly transitions to abut with the varying second diameter (706) at the second end (112) of the middle portion (108), and wherein the first diameter (704) of the first end portion (116) is greater than the varying second diameter (706) of the middle portion (108) and the third diameter (710) is greater than the varying second diameter (706) of the middle portion (108).
Clause 27. The line management device of Clause 26 wherein the line management device (100) is symmetrical in relation to a midpoint (712) of the middle portion (108) along the central axis (106).
Clause 28. The line management device of Clause 26 wherein the first end portion (116) comprises an overhang (802) at an outer perimeter (714) proximate the middle portion (108) of the main body (104), the overhang (802) forming a channel (804) to obstruct the utility line (102) from passing over the first end portion (116).
Clause 29. The line management device of Clause 26 wherein the second end portion (120) comprises an overhang (806) at an outer perimeter (716) proximate the middle portion (108) of the main body (104), the overhang (806) forming a channel (808) to obstruct the utility line (102) from passing over the second end portion (120).
Clause 30. The line management device of Clause 1 wherein the main body (104) comprises a truncated main body (902) in which a wedge (904) along the central axis (106) is truncated from a periphery (906) toward a center (908) of the main body (104), the wedge (904) forming a first truncated surface (910) in the first end portion (116), a second truncated surface (912) in the middle portion (108) and a third truncated surface (914) in the second end portion (120), the first truncated surface (910), the second truncated surface (912) and the third truncated surface (914) configured to mate with the object (202) in the local environment (200).
Clause 31. The line management device of Clause 30 wherein the object (202) in the local environment (200) comprises at least one of an end of a wing panel for a cubicle, a top of a panel for a cubicle, a corner on a vertical edge of a door, a corner on a top edge of the door, a corner on a door frame of an open door, a leg of the object, a wheel of a mobile object, an outer corner of a wall, an outer corner of a half wall, a corner of a step, a corner of a pass through-like opening in a wall, a corner of a window sill and a corner of a window casing.
Clause 32. The line management device of Clause 30 wherein the wedge (904) truncated from the main body (104) comprises at least one of a wedge (904) ranging from approximately 10 degrees to approximately 45 degrees, a wedge (904) ranging from approximately 45 degrees to approximately 90 degrees, an approximately 90 degree wedge (904), a wedge (904) ranging from approximately 90 degrees to approximately 135 degrees, a wedge (904) ranging from approximately 135 degrees to approximately 157.5 degrees and a wedge (904) ranging from approximately 137.5 degrees to approximately 180 degrees.
Clause 33. The line management device of Clause 30, further comprising an attaching mechanism (916) configured to secure the truncated main body (902) to the object (202) in the local environment (200).
Clause 34. The line management device of Clause 33 wherein the attaching mechanism (916) comprises at least one of one or more magnets (404), one or more zip ties, one or more hook and loop fasteners, one or more suction cup mounts, an adhesive, one or more pieces of double stick tape and one or more mounting tabs (2902).
Clause 35. The line management device of Clause 33 wherein the attaching mechanism (916) comprises at least one of one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets and one or more manganese aluminum gallium magnets.
Clause 36. The line management device of Clause 33, the attaching mechanism (916) comprising a flange (1002) secured to the truncated main body (902) and configured to secure the line management device (100) in relation to the object (202) in the local environment (200).
Clause 37. The line management device of Clause 33, the attaching mechanism (916) comprising a mounting plate (1004) secured to the object (202) in the local environment (200), wherein the truncated main body (902) is secured to the mounting plate (1004).
Clause 38. The line management device of Clause 30, the second end portion (120) of the truncated main body (902) further comprising: an interior end (918) abutting the second end (112) of the middle portion (108); an exterior end (920) spaced from the interior end (918) along the central axis (106) by the third truncated surface (914); and a retaining lip (1102) extending from the third truncated surface (914) at the exterior end (920), the retaining lip (1102) having a thickness (1104) along the central axis (106) and a length (1106) from the third truncated surface (914) into an area defined by the wedge (904), the thickness (1104) and the length (1106) of the retaining lip (1102) sized to retain the line management device (100) in relation to the object (202) in the local environment (200).
Clause 39. The line management device of Clause 38 wherein the retaining lip (1102) is configured to fit a gap (1108) between the object (202) and a substrate (1110) in the local environment (200) where the object (202) is spaced away from the substrate (1110) by a support member (1112).
Clause 40. The line management device of Clause 38, further comprising an extension member (1202) at least temporarily attached to the exterior end (920) of the second end portion (120) such that the retaining lip (1102) in combination with the extension member (1202) is configured to fit a gap (1108) between the object (202) and a substrate (1110) in the local environment (200) where the object (202) is spaced away from the substrate (1110) by a support member (1112).
Clause 41. The line management device of Clause 40, further comprising a fastening mechanism (1204) configured to at least temporarily attach the extension member (1202) to the exterior end (920) of the second end portion (120).
Clause 42. The line management device of Clause 38 wherein the retaining lip (1102) is configured to mate with a recessed area (1402) in the object (202).
Clause 43. The line management device of Clause 30, the second end portion (120) of the truncated main body (902) further comprising: an interior end (918) abutting the second end (112) of the middle portion (108); an exterior end (920) spaced from the interior end (918) along the central axis (106) by the third truncated surface (914); and a retaining lip (1102) extending from the third truncated surface (914) proximate the exterior end (920) to the second exterior surface (122), the retaining lip (1102) having a thickness (1104) along the central axis (106), the retaining lip (1102) being adjacent to an area defined by the wedge (904), the thickness (1104) of the retaining lip (1102) sized to retain the line management device (100) in relation to the object (202) in the local environment (200).
Clause 44. The line management device of Clause 43 wherein the second end portion (120) of the main body (104) comprises a threaded bore (1302) along the central axis (106), the line management device (100) further comprising: a nested extension member (1304) comprising an outer wall (1306), a base portion (1308) and a threaded stud (1310), the outer wall (1306) configured to fit over the exterior end (920) of the second end portion (120) in response to turning the threaded stud (1310) into the threaded bore (1302) by rotating the nested extension member (1304); and a compression spring (1312) placed on the threaded stud (1310) to apply a compression force to the nested extension member (1304) as the threaded stud (1310) is turned into the threaded bore (1302).
Clause 45. The line management device of Clause 44 wherein the compression force facilitates retention of the nested extension member (1304) at a desired spacing between the base portion (1308) and the exterior end (920) of the second end portion (120), the desired spacing being adjustable between a minimum spacing and a maximum spacing to an adjusted spacing that mates with a recessed area (1402) in the object (202).
Clause 46. The line management device of Clause 1, further comprising a scalable length (1502) along the central axis (106) and a scalable width (1504) perpendicular to the central axis (106).
Clause 47. The line management device of Clause 46 wherein the scalable length (1502) ranges from approximately three inches to approximately twelve inches.
Clause 48. The line management device of Clause 46 wherein the scalable width (1504) ranges from approximately two inches to approximately six inches.
Clause 49. A method (1600) for guiding local distribution of a utility line (102), comprising: installing (1602) a line management device (100) in relation to an object (202) in a local environment (200), the line management device (100) comprising a main body (104) with a middle portion (108) having a contoured surface (114) extending between a first end (110) and a second end (112), a first end portion (116) abutting the first end (110) of the middle portion (108) and a second end portion (120) abutting the second end (112) of the middle portion (108); placing (1604) the utility line (102) proximate to the contoured surface (114); pulling (1606) the utility line (102) across the contoured surface (114); andspacing (1608) the utility line (102) away from the object (202) in the local environment (200) and guiding the utility line (102) away from the object (202).
Clause 50. The method of Clause 49, further comprising: directing (1610) the utility line (102) from a first exterior surface (118) of the first end portion (116) toward the middle portion (108) during the pulling (1606) of the utility line (102); and obstructing (1612) the utility line (102) from passing over the first end portion (116) and outside the main body (104) at the first exterior surface (118) of the first end portion (116).
Clause 51. The method of Clause 49, further comprising: directing (1614) the utility line (102) from a second exterior surface (122) of the second end portion (120) toward the middle portion (108) during the pulling (1606) of the utility line (102); and obstructing (1616) the utility line (102) from passing over the second end portion (120) and outside the main body (104) at the second exterior surface (122) of the second end portion (120).
Clause 52. The method of Clause 49 wherein the utility line (102) comprises at least one of an electrical cord, an electrical cable, a fiber optic cable, an Ethernet cable, a coaxial cable, an electrical wire, a wire harness, a flexible conduit, a pressurized air line, a pressurized air hose, a pneumatic line, a pneumatic hose, a vacuum line, a dust collection hose, a flexible air duct, a flexible water pipe, a flexible water line, a flexible drain pipe, a flexible drain line, a hydraulic line and a pressurized hydraulic line.
Clause 53. The method of Clause 49 wherein the object (202) in the local environment (200) comprises at least one of an end of a wing panel for a cubicle, a top of a panel for a cubicle, a wall of a wing panel for a cubicle, a face of a door, a wall, a floor, a half wall, a step, a window and a substrate.
Clause 54. The method of Clause 49 wherein the local environment (200) comprises a commercial building, a business office, a cubicle area, a residential building, a living area, an area through which utility lines are distributed, a commercial vehicle in which utility lines are distributed and a personal vehicle in which utility lines are distributed.
Clause 55. The method of Clause 49 wherein the contoured surface (114) of the middle portion (108) of the main body (104) comprises a low friction coating (124) to facilitate the pulling (1606) of the utility line (102) across the contoured surface (114).
Clause 56. The method of Clause 49 wherein the middle portion (108) of the main body (104) comprises at least one bearing (302) embedded in the contoured surface (114) and circumferentially spaced apart around the contoured surface (114) to facilitate the pulling (1606) of the utility line (102) across the contoured surface (114).
Clause 57. The method of Clause 49 wherein the line management device (100) comprises a mounting plate (2218), the installing (1602) of the line management device (100) further comprising: mounting (2302) the mounting plate (2218) to a substrate (1110) in the local environment (200); and securing (2304) the line management device (100) to the mounting plate (2218) using a bolt (2204).
Clause 58. The method of Clause 57 wherein the main body (104) comprises a through bore (2202) along the central axis (106) configured to receive the bolt (2204), wherein the through bore (2202) comprises a first counterbore (2206) at a top surface (2208) of the main body (104) and a second counterbore (2210) at a bottom surface (2212) of the main body (104), wherein the line management device (100) comprises a first radial ball bearing (2214) secured in the first counterbore (2206) and configured to receive the bolt (2204) and a second radial ball bearing (2216) secured in the second counterbore (2210) and configured to receive the bolt (2204), wherein the first radial ball bearing (2214) and the second radial ball bearing (2216) facilitate the pulling (1606) of the utility line (102) across the contoured surface (114).
Clause 59. The method of Clause 57 wherein the line management device (100) comprises a retaining bracket (2502), a first thrust bearing (2510) and a second thrust bearing (2514), the retaining bracket (2502) comprising a first arm (2504), a second arm (2506) and a retaining member (2508) extending between the first arm (2504) and the second arm (2506) and radially covering a portion of the main body (104) to retain the utility line (102), the installing (1602) of the line management device (100) further comprising: placing (2602) the second thrust bearing (2514) over a threaded aperture (2516) of the mounting plate (2218); placing (2604) the retaining bracket (2502) over the second thrust bearing (2514) with a second aperture (2518) in the second arm (2506) aligned with the threaded aperture (2516) of the mounting plate (2218); placing (2606) the main body (104) inside the retaining bracket (2502) between the first arm (2504) and the second arm (2506) with a central aperture (2520) of the main body (104) aligned with the second aperture (2518) of the second arm (2506) and a first aperture (2522) of the first arm (2504); placing (2608) the first thrust bearing (2510) over the first aperture (2522) of the first arm (2504); inserting (2610) the bolt (2204) through the first thrust bearing (2510), the first arm (2504) of the retaining bracket (2502), the main body (104), the second arm (2506) of the retaining bracket (2502), and the second thrust bearing (2514); and engaging (2612) threads (2524) of the bolt (2204) with the threaded aperture (2516) of the mounting plate (2218).
Clause 60. The method of Clause 49 wherein the line management device (100) further comprises an attaching mechanism (402), the installing (1602) of the line management device (100) comprising: securing (1702) the main body (104) to the object (202) in the local environment (200) using the attaching mechanism (402).
Clause 61. The method of Clause 60 wherein the attaching mechanism (402) comprises at least one of one or more magnets (404), one or more zip ties, one or more hook and loop fasteners, one or more suction cup mounts, an adhesive, one or more pieces of double stick tape and one or more mounting tabs (2902).
Clause 62. The method of Clause 60 wherein the attaching mechanism (402) comprises at least one of one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets and one or more manganese aluminum gallium magnets.
Clause 63. The method of Clause 60 wherein the attaching mechanism (402) comprises a flange (406) secured to the main body (104), the installing (1602) of the line management device (100) further comprising: securing (1704) the flange (406) to the object (202) in the local environment (200) using one or more fastener.
Clause 64. The method of Clause 60 wherein the attaching mechanism (402) comprises a mounting plate (408) secured to the object (202) in the local environment (200), the installing (1602) of the line management device (100) further comprising: securing (1706) the line management device (100) to the mounting plate (408) on the object (202) in the local environment (200).
Clause 65. The method (1800) of Clause 49 wherein the line management device (100) comprises an installation/removal mechanism (410) affixed to the main body (104), the installing (1602) of the line management device (100) comprising: installing (1802) the line management device (100) to the object (202) in the local environment (200) using a tool in conjunction with the installation/removal mechanism (410).
Clause 66. The method of Clause 65 wherein the installation/removal mechanism (410) comprises a magnet (404).
Clause 67. The method of Clause 66 wherein the magnet (404) comprises at least one of a neodymium magnet, a tetrataenite magnet, a dysprosium magnet, an ytterbium magnet, a cerium magnet, a samarium magnet, an iron nitride magnet, a manganese aluminum carbon magnet and a manganese aluminum gallium magnet.
Clause 68. The method of Clause 65 wherein the installation/removal mechanism (410) comprises at least one of a gripping mechanism, an eyelet screw, a hook screw and a grab handle.
Clause 69. The method of Clause 49 wherein the first end portion (116) of the main body (104) is shaped like a mushroom cap (502) with a varying first diameter (504) that intersects a central axis (106), and wherein the middle portion (108) of the main body (104) is defined by a varying second diameter (506) that intersects the central axis (106), the contoured surface (114) of the middle portion (108) being concave shaped along the central axis (106) such that the varying second diameter (506) at the first end (110) of the middle portion (108) smoothly transitions to abut with the varying first diameter (504) of the first end portion (116), the varying second diameter (506) at the second end (112) of the middle portion (108) smoothly transitions to abut with the second end portion (120) and the varying second diameter (506) is smallest between the first end (110) and the second end (112) of the middle portion (108), and wherein the second end portion (120) of the main body (104) comprises a base (508) with a varying third diameter (510) that intersects the central axis (106) and decreases from a wider diameter (512) to a thinner diameter that smoothly transitions to abut with the varying second diameter (506) at the second end (112) of the middle portion (108), and wherein the varying first diameter (504) of the first end portion (116) is greater than the varying third diameter (510) of the second end portion (120) and the varying third diameter (510) is greater than the varying second diameter (506) of the middle portion (108).
Clause 70. The method (1800) of Clause 69 wherein the first end portion (116) that is shaped like the mushroom cap (502) comprises an overhang (602) at an outer perimeter (514) proximate the middle portion (108) of the main body (104), the method further comprising obstructing (1804) the utility line (102) from passing over the first end portion (116) based on the overhang (602) at the outer perimeter (514) of the first end portion (116).
Clause 71. The method (1800) of Clause 69, the method further comprising obstructing (1806) the utility line (102) from passing over the second end portion (120) based on the wider diameter (512) of the second end portion (120).
Clause 72. The method of Clause 49 wherein the first end portion (116) of the main body (104) comprises a first thickness (702) with a first diameter (704) that intersects a central axis (106), and wherein the middle portion (108) of the main body (104) is defined by a varying second diameter (706) that intersects the central axis (106), the contoured surface (114) of the middle portion (108) being concave shaped along the central axis (106) such that the varying second diameter (706) at the first end (110) of the middle portion (108) smoothly transitions to abut with the first diameter (704) of the first end portion (116), the varying second diameter (706) at the second end (112) of the middle portion (108) smoothly transitions to abut with the second end portion (120) and the varying second diameter (706) is smallest between the first end (110) and the second end (112) of the middle portion (108), and wherein the second end portion (120) of the main body (104) comprises a second thickness (708) with a third diameter (710) that intersects the central axis (106) and smoothly transitions to abut with the varying second diameter (706) at the second end (112) of the middle portion (108), and wherein the first diameter (704) of the first end portion (116) is greater than the varying second diameter (706) of the middle portion (108) and the third diameter (710) is greater than the varying second diameter (706) of the middle portion (108).
Clause 73. The method (1900) of Clause 72 wherein the first end portion (116) comprises an overhang (802) at an outer perimeter (714) proximate the middle portion (108) of the main body (104), the method further comprising obstructing (1902) the utility line (102) from passing over the first end portion (116) based on the overhang (802) at the outer perimeter (714) of the first end portion (116).
Clause 74. The method (1900) of Clause 72 wherein the second end portion (120) comprises an overhang (806) at an outer perimeter (716) proximate the middle portion (108) of the main body (104), the method further comprising obstructing (1904) the utility line (102) from passing over the second end portion (120) based on the overhang (806) at the outer perimeter (716) of the second end portion (120).
Clause 75. The method of Clause 49 wherein the main body (104) comprises a truncated main body (902) in which a wedge (904) along a central axis (106) is truncated from a periphery (906) toward a center (908) of the main body (104), the wedge (904) forming a first truncated surface (910) in the first end portion (116), a second truncated surface (912) in the middle portion (108) and a third truncated surface (914) in the second end portion (120), the installing (1602) of the line management device (100) comprising aligning (2002) the first truncated surface (910), the second truncated surface (912) and the third truncated surface (914) with a mating surface of the object (202) in the local environment (200).
Clause 76. The method of Clause 75 wherein the object (202) in the local environment (200) comprises at least one of an end of a wing panel for a cubicle, a top of a panel for a cubicle, a corner on a vertical edge of a door, a corner on a top edge of the door, a corner on a door frame of an open door, a leg of the object, a wheel of a mobile object, an outer corner of a wall, an outer corner of a half wall, a corner of a step, a corner of a pass through-like opening in a wall, a corner of a window sill and a corner of a window casing.
Clause 77. The method of Clause 75 wherein the wedge (904) truncated from the main body (104) comprises at least one of a wedge (904) ranging from approximately 10 degrees to approximately 45 degrees, a wedge (904) ranging from approximately 45 degrees to approximately 90 degrees, an approximately 90 degree wedge (904), a wedge (904) ranging from approximately 90 degrees to approximately 135 degrees, a wedge (904) ranging from approximately 135 degrees to approximately 157.5 degrees and a wedge (904) ranging from approximately 137.5 degrees to approximately 180 degrees.
Clause 78. The method of Clause 75 wherein the line management device (100) further comprises an attaching mechanism (916), the installing (1602) of the line management device (100) comprising securing (2004) the truncated main body (902) to the object (202) in the local environment (200) using the attaching mechanism (916).
Clause 79. The method of Clause 78 wherein the attaching mechanism (916) comprises at least one of one or more magnets (404), one or more zip ties, one or more hook and loop fasteners, one or more suction cup mounts, an adhesive, one or more pieces of double stick tape and one or more mounting tabs (2902).
Clause 80. The method of Clause 78 wherein the attaching mechanism (916) comprises at least one of one or more neodymium magnets, one or more tetrataenite magnets, one or more dysprosium magnets, one or more ytterbium magnets, one or more cerium magnets, one or more samarium magnets, one or more iron nitride magnets, one or more manganese aluminum carbon magnets and one or more manganese aluminum gallium magnets.
Clause 81. The method of Clause 78 wherein the attaching mechanism (916) comprises a flange (1002) secured to the truncated main body (902), the installing (1602) of the line management device (100) further comprising securing (2006) the flange (1002) to the object (202) in the local environment (200) using one or more fasteners.
Clause 82. The method of Clause 78 wherein the attaching mechanism (916) comprises a mounting plate (408) secured to the object (202) in the local environment (200), the installing (1602) of the line management device (100) further comprising securing (2008) the line management device (100) to the mounting plate (408) on the object (202) in the local environment (200).
Clause 83. The method of Clause 75 wherein the second end portion (120) of the truncated main body (902) further comprises an interior end (918) abutting the second end (112) of the middle portion (108), an exterior end (920) spaced from the interior end (918) along the central axis (106) by the third truncated surface (914) and a retaining lip (1102) extending from the third truncated surface (914) at the exterior end (920), the retaining lip (1102) having a thickness (1104) along the central axis (106) and a length (1106) from the third truncated surface (914) into an area defined by the wedge (904), the thickness (1104) and the length (1106) of the retaining lip (1102) sized to retain the line management device (100) in relation to the object (202) in the local environment (200).
Clause 84. The method of Clause 83, the installing (1602) of the line management device (100) comprising fitting (2102) the retaining lip (1102) into a gap (1108) between the object (202) and a substrate (1110) in the local environment (200), the object (202) being spaced away from the substrate (1110) by a support member (1112).
Clause 85. The method of Clause 83 wherein the line management device (100) further comprises an extension member (1202) at least temporarily attached to the exterior end (920) of the second end portion (120), the installing (1602) of the line management device (100) comprising fitting (2104) the retaining lip (1102) in combination with the extension member (1202) into a gap (1108) between the object (202) and a substrate (1110) in the local environment (200), the object (202) being spaced away from the substrate (1110) by a support member (1112).
Clause 86. The method of Clause 85 wherein the line management device (100) further comprises a fastening mechanism (1204), the installing (1602) of the line management device (100) further comprising at least temporarily securing (2112) the extension member (1202) to the exterior end (920) of the second end portion (120) using the fastening mechanism (1204).
Clause 87. The method of Clause 83 wherein the retaining lip (1102) is configured to mate with a recessed area (1402) in the object (202), the installing (1602) of the line management device (100) further comprising aligning (2114) the retaining lip (1102) with the recessed area (1402) in the object (202).
Clause 88. The method of Clause 87 wherein the second end portion (120) of the truncated main body (902) further comprises an interior end (918) abutting the second end (112) of the middle portion (108), an exterior end (920) spaced from the interior end (918) along the central axis (106) by the third truncated surface (914) and a retaining lip (1102) extending from the third truncated surface (914) proximate the exterior end (920) to a second exterior surface (122) of the second end portion (120), the retaining lip (1102) having a thickness (1104) along the central axis (106), the retaining lip (1102) being adjacent to an area defined by the wedge (904), the thickness (1104) of the retaining lip (1102) sized to retain the line management device (100) in relation to the object (202) in the local environment (200).
89. The method of Clause 75 wherein the line management device (100) comprises a nested extension member (1304) with an outer wall (1306), a base portion (1308) and a threaded stud (1310) that adjustably threads into a threaded bore (1302) along the central axis (106) in the second end portion (120) of the main body (104), the installing (1602) of the line management device (100) further comprising: turning (2402) the threaded stud (1310) into the threaded bore (1302) by rotating the nested extension member (1304) to a coarse spacing between the base portion (1308) of the nested extension member (1304) and an exterior end (920) of the second end portion (120); compressing (2404) a compression spring (1312) on the threaded stud (1310) between the exterior end (920) of the second end portion (120) and the base portion (1308); adjusting (2406) the coarse spacing between the base portion (1308) and the exterior end (920) to achieve a desired spacing based on a gap (1108) between the object (202) and a substrate (1110), the object (202) being spaced away from the substrate (1110) by a support member (1112); applying (2408) a retention force on the nested extension member (1304) to retain the nested extension member (1304) at the desired spacing based on the compressing (2404) of the compression spring (1312) and the adjusting (2406) of the coarse spacing; and fitting (2410) a retaining lip (1102) in combination with the nested extension member (1304) into the gap (1108) between the object (202) and the substrate (1110).
Clause 90. A cable management device (126) for guiding local distribution of an electrical cable (128), comprising: a main body (104) with a central axis (106), the main body (104) comprising: a middle portion (108) intersecting the central axis (106) and comprising a first end (110), a second end (112) and a contoured surface (114) extending between the first end (110) and the second end (112), the contoured surface (114) having a contour to direct the electrical cable (128) in relation to an object (202) in a local environment (200); a first end portion (116) intersecting the central axis (106), abutting the first end (110) of the middle portion (108) and comprising a first exterior surface (118), the first exterior surface (118) shaped to direct the electrical cable (128) toward the middle portion (108) and to obstruct the electrical cable (128) from passing over the first end portion (116) and outside the main body (104); and a second end portion (120) intersecting the central axis (106), abutting the second end (112) of the middle portion (108) and comprising a second exterior surface (122), the second exterior surface (122) shaped to direct the electrical cable (128) toward the middle portion (108) and to obstruct the electrical cable (128) from passing over the second end portion (120) and outside the main body (104); and one or more magnets (404) embedded in one or more of the middle portion (108), the first end portion (116) and the second end portion (120), the one or more magnets (404) configured to secure the main body (104) to the object (202) in the local environment (200).
Clause 91. The cable management device of Clause 90 wherein the electrical cable (128) comprises at least one of an electrical cord, a vacuum cleaner cord, an extension cord, a fiber optic cable, an Ethernet cable, a coaxial cable and a wire harness.
Clause 92. The cable management device of Clause 90, the contoured surface (114) of the middle portion (108) of the main body (104) comprising a low friction coating (124) configured to facilitate pulling the electrical cable (128) across the contoured surface (114).
Clause 93. The cable management device of Clause 90, the middle portion (108) of the main body (104) comprising at least one bearing (302) embedded in the contoured surface (114) and circumferentially spaced apart around the contoured surface (114) to facilitate pulling the electrical cable (128) across the contoured surface (114).
Clause 94. The cable management device of Clause 90 wherein the main body (104) comprises a through bore (2202) along the central axis (106) configured to receive a bolt (2204), wherein the through bore (2202) comprises a first counterbore (2206) at a top surface (2208) of the main body (104) and a second counterbore (2210) at a bottom surface (2212) of the main body (104), the cable management device (126) further comprising: a first radial ball bearing (2214) secured in the first counterbore (2206) and configured to receive the bolt (2204); a second radial ball bearing (2216) secured in the second counterbore (2210) and configured to receive the bolt (2204); and a mounting plate (2218) configured for mounting on a substrate (1110) and for engagement by the bolt (2204) to support the second radial ball bearing (2216) and thereby support the cable management device (126).
Clause 95. The cable management device of Clause 94, further comprising: a retaining bracket (2502) comprising a first arm (2504), a second arm (2506) and a retaining member (2508) extending between the first arm (2504) and the second arm (2506) and radially covering a portion of the main body (104) to retain the electrical cable (128), the first arm (2504) covering the first radial ball bearing (2214) and configured to receive the bolt (2204), the second arm (2506) covering the second radial ball bearing (2216) and configured to receive the bolt (2204); a first thrust bearing (2510) configured to receive the bolt (2204) and disposed between a head (2512) of the bolt (2204) and the first arm (2504) of the retaining bracket (2502); and a second thrust bearing (2514) configured to receive the bolt (2204) and disposed between the second arm (2506) of the retaining bracket (2502) and the mounting plate (2218).
Clause 96. The cable management device of Clause 90, further comprising a flange (406) secured to the main body (104) and configured to secure the cable management device (126) in relation to the object (202) in the local environment (200).
Clause 97. The cable management device of Clause 90, further comprising a mounting plate (408) secured to the object (202) in the local environment (200), wherein the main body (104) is secured to the mounting plate (408).
Clause 98. The cable management device of Clause 90, further comprising an installation/removal mechanism (410) affixed to the main body (104) to facilitate installation and removal of the cable management device (126) in relation to the object (202) in the local environment (200).
Clause 99. The cable management device of Clause 90 wherein the first end portion (116) of the main body (104) is shaped like a mushroom cap (502) with a varying first diameter (504) that intersects the central axis (106), and wherein the middle portion (108) of the main body (104) is defined by a varying second diameter (506) that intersects the central axis (106), the contoured surface (114) of the middle portion (108) being concave shaped along the central axis (106) such that the varying second diameter (506) at the first end (110) of the middle portion (108) smoothly transitions to abut with the varying first diameter (504) of the first end portion (116), the varying second diameter (506) at the second end (112) of the middle portion (108) smoothly transitions to abut with the second end portion (120) and the varying second diameter (506) is smallest between the first end (110) and the second end (112) of the middle portion (108), and wherein the second end portion (120) of the main body (104) comprises a base (508) with a varying third diameter (510) that intersects the central axis (106) and decreases from a wider diameter (512) to a thinner diameter that smoothly transitions to abut with the varying second diameter (506) at the second end (112) of the middle portion (108), and wherein the varying first diameter (504) of the first end portion (116) is greater than the varying third diameter (510) of the second end portion (120) and the varying third diameter (510) is greater than the varying second diameter (506) of the middle portion (108).
Clause 100. The cable management device of Clause 99 wherein the first end portion (116) that is shaped like the mushroom cap (502) comprises an overhang (602) at an outer perimeter (514) proximate the middle portion (108) of the main body (104), the overhang (602) forming a channel (604) to obstruct the electrical cable (128) from passing over the first end portion (116).
Clause 101. The cable management device of Clause 90 wherein the first end portion (116) of the main body (104) comprises a first thickness (702) with a first diameter (704) that intersects the central axis (106), and wherein the middle portion (108) of the main body (104) is defined by a varying second diameter (706) that intersects the central axis (106), the contoured surface (114) of the middle portion (108) being concave shaped along the central axis (106) such that the varying second diameter (706) at the first end (110) of the middle portion (108) smoothly transitions to abut with the first diameter (704) of the first end portion (116), the varying second diameter (706) at the second end (112) of the middle portion (108) smoothly transitions to abut with the second end portion (120) and the varying second diameter (706) is smallest between the first end (110) and the second end (112) of the middle portion (108), and wherein the second end portion (120) of the main body (104) comprises a second thickness (708) with a third diameter (710) that intersects the central axis (106) and smoothly transitions to abut with the varying second diameter (706) at the second end (112) of the middle portion (108), and wherein the first diameter (704) of the first end portion (116) is greater than the varying second diameter (706) of the middle portion (108) and the third diameter (710) is greater than the varying second diameter (706) of the middle portion (108).
Clause 102. The cable management device of Clause 101 wherein the cable management device (126) is symmetrical in relation to a midpoint (712) of the middle portion (108) along the central axis (106).
Clause 103. The cable management device of Clause 101 wherein the first end portion (116) comprises an overhang (802) at an outer perimeter (714) proximate the middle portion (108) of the main body (104), the overhang (802) forming a channel (804) to obstruct the electrical cable (128) from passing over the first end portion (116).
Clause 104. The cable management device of Clause 101 wherein the second end portion (120) comprises an overhang (806) at an outer perimeter (716) proximate the middle portion (108) of the main body (104), the overhang (806) forming a channel (808) to obstruct the electrical cable (128) from passing over the second end portion (120).
Clause 105. The cable management device of Clause 90 wherein the main body (104) comprises a truncated main body (902) in which a wedge (904) along the central axis (106) is truncated from a periphery (906) toward a center (908) of the main body (104), the wedge (904) forming a first truncated surface (910) in the first end portion (116), a second truncated surface (912) in the middle portion (108) and a third truncated surface (914) in the second end portion (120), the first truncated surface (910), the second truncated surface (912) and the third truncated surface (914) configured to mate with the object (202) in the local environment (200).
Clause 106. The cable management device of Clause 105, the cable management device (126) further comprising: a flange (1002) secured to the truncated main body (902) and configured to secure the cable management device (126) in relation to the object (202) in the local environment (200).
Clause 107. The cable management device of Clause 105, the cable management device (126) further comprising a mounting plate (408) secured to the object (202) in the local environment (200), wherein the truncated main body (902) is secured to the mounting plate (408).
Clause 108. The cable management device of Clause 105, the second end portion (120) of the truncated main body (902) further comprising: an interior end (918) abutting the second end (112) of the middle portion (108); an exterior end (920) spaced from the interior end (918) along the central axis (106) by the third truncated surface (914); and a retaining lip (1102) extending from the third truncated surface (914) at the exterior end (920), the retaining lip (1102) having a thickness (1104) along the central axis (106) and a length (1106) from the third truncated surface (914) into an area defined by the wedge (904), the thickness (1104) and the length (1106) of the retaining lip (1102) sized to retain the cable management device (126) in relation to the object (202) in the local environment (200).
Clause 109. The cable management device of Clause 108, further comprising an extension member (1202) at least temporarily attached to the exterior end (920) of the second end portion (120) such that the retaining lip (1102) in combination with the extension member (1202) is configured to fit a gap (1108) between the object (202) and a substrate (1110) in the local environment (200) where the object (202) is spaced away from the substrate (1110) by a support member (1112).
Clause 110. The cable management device of Clause 109, further comprising a fastening mechanism (1204) configured to at least temporarily attach the extension member (1202) to the exterior end (920) of the second end portion (120).
Clause 111. The cable management device of Clause 105, the second end portion (120) of the truncated main body (902) further comprising: an interior end (918) abutting the second end (112) of the middle portion (108); an exterior end (920) spaced from the interior end (918) along the central axis (106) by the third truncated surface (914); and a retaining lip (1102) extending from the third truncated surface (914) proximate the exterior end (920) to the second exterior surface (122), the retaining lip (1102) having a thickness (1104) along the central axis (106), the retaining lip (1102) being adjacent to an area defined by the wedge (904), the thickness (1104) of the retaining lip (1102) sized to retain the cable management device (126) in relation to the object (202) in the local environment (200).
Clause 112. The cable management device of Clause 111 wherein the second end portion (120) of the main body (104) comprises a threaded bore (1302) along the central axis (106), the cable management device (126) comprising: a nested extension member (1304) comprising an outer wall (1306), a base portion (1308) and a threaded stud (1310), the outer wall (1306) configured to fit over the exterior end (920) of the second end portion (120) in response to turning the threaded stud (1310) into the threaded bore (1302) by rotating the nested extension member (1304); and a compression spring (1312) placed on the threaded stud (1310) to apply a compression force to the nested extension member (1304) as the threaded stud (1310) is turned into the threaded bore (1302).
Clause 113. The cable management device of Clause 112 wherein the compression force facilitates retention of the nested extension member (1304) at a desired spacing between the base portion (1308) and the exterior end (920) of the second end portion (120), the desired spacing being adjustable between a minimum spacing and a maximum spacing to an adjusted spacing that mates with a recessed area (1402) in the object (202).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, various examples of the line management devices 100, cable management devices 126 and methods 1600, 1800, 1900 for guiding local distribution of utility lines 102 have been shown and described, modifications may occur to those skilled in the art upon reading the specification. The present application includes such modifications and is limited only by the scope of the claims.

## Claims

1. A line management device (100) for guiding local distribution of a utility line (102), comprising:
a main body (104) with a central axis (106), the main body (104) comprising:
a middle portion (108) intersecting the central axis (106) and comprising a first end (110), a second end (112) and a contoured surface (114) extending between the first end (110) and the second end (112), the contoured surface (114) having a contour to direct the utility line (102) in relation to an object (202) in a local environment (200);
a first end portion (116) intersecting the central axis (106), abutting the first end (110) of the middle portion (108) and comprising a first exterior surface (118), the first exterior surface (118) shaped to direct the utility line (102) toward the middle portion (108) and to obstruct the utility line (102) from passing over the first end portion (116) and outside the main body (104); and
a second end portion (120) intersecting the central axis (106), abutting the second end (112) of the middle portion (108) and comprising a second exterior surface (122), the second exterior surface (122) shaped to direct the utility line (102) toward the middle portion (108) and to obstruct the utility line (102) from passing over the second end portion (120) and outside the main body (104).

2. The line management device of Claim 1, the contoured surface (114) of the middle portion (108) of the main body (104) comprising:
a low friction coating (124) configured to facilitate pulling the utility line (102) across the contoured surface (114).

3. The line management device of Claim 1 or 2, the middle portion (108) of the main body (104) comprising:
at least one bearing (302) embedded in the contoured surface (114) and circumferentially spaced apart around the contoured surface (114) to facilitate pulling the utility line (102) across the contoured surface (114).

4. The line management device of any one of Claims 1-3 wherein the main body (104) comprises a through bore (2202) along the central axis (106) configured to receive a bolt (2204), wherein the through bore (2202) comprises a first counterbore (2206) at a top surface (2208) of the main body (104) and a second counterbore (2210) at a bottom surface (2212) of the main body (104), the line management device (100) further comprising:
a first radial ball bearing (2214) secured in the first counterbore (2206) and configured to receive the bolt (2204);
a second radial ball bearing (2216) secured in the second counterbore (2210) and configured to receive the bolt (2204); and
a mounting plate (2218) configured for mounting on a substrate (1110) and for engagement by the bolt (2204) to support the second radial ball bearing (2216) and thereby support the line management device (100).

5. The line management device of any one of Claims 1-4, further comprising:
an attaching mechanism (402) configured to secure the main body (104) to the object (202) in the local environment (200).

6. The line management device of any one of Claims 1-5, further comprising:
an installation/removal mechanism (410) affixed to the main body (104) to facilitate installation and removal of the line management device (100) in relation to the object (202) in the local environment (200).

7. The line management device of Claim 6 wherein the installation/removal mechanism (410) comprises a magnet (404), and/or wherein the installation/removal mechanism (410) comprises at least one of a gripping mechanism, an eyelet screw, a hook screw and a grab handle.

8. The line management device of any one of Claims 1-7 wherein the first end portion (116) of the main body (104) is shaped like a mushroom cap (502) with a varying first diameter (504) that intersects the central axis (106), and
wherein the middle portion (108) of the main body (104) is defined by a varying second diameter (506) that intersects the central axis (106), the contoured surface (114) of the middle portion (108) being concave shaped along the central axis (106) such that the varying second diameter (506) at the first end (110) of the middle portion (108) smoothly transitions to abut with the varying first diameter (504) of the first end portion (116), the varying second diameter (506) at the second end (112) of the middle portion (108) smoothly transitions to abut with the second end portion (120) and the varying second diameter (506) is smallest between the first end (110) and the second end (112) of the middle portion (108), and
wherein the second end portion (120) of the main body (104) comprises a base (508) with a varying third diameter (510) that intersects the central axis (106) and decreases from a wider diameter (512) to a thinner diameter that smoothly transitions to abut with the varying second diameter (506) at the second end (112) of the middle portion (108), and
wherein the varying first diameter (504) of the first end portion (116) is greater than the varying third diameter (510) of the second end portion (120) and the varying third diameter (510) is greater than the varying second diameter (506) of the middle portion (108).

9. The line management device of any one of Claims 1-8 wherein the first end portion (116) of the main body (104) comprises a first thickness (702) with a first diameter (704) that intersects the central axis (106), and
wherein the middle portion (108) of the main body (104) is defined by a varying second diameter (706) that intersects the central axis (106), the contoured surface (114) of the middle portion (108) being concave shaped along the central axis (106) such that the varying second diameter (706) at the first end (110) of the middle portion (108) smoothly transitions to abut with the first diameter (704) of the first end portion (116), the varying second diameter (706) at the second end (112) of the middle portion (108) smoothly transitions to abut with the second end portion (120) and the varying second diameter (706) is smallest between the first end (110) and the second end (112) of the middle portion (108), and
wherein the second end portion (120) of the main body (104) comprises a second thickness (708) with a third diameter (710) that intersects the central axis (106) and smoothly transitions to abut with the varying second diameter (706) at the second end (112) of the middle portion (108), and
wherein the first diameter (704) of the first end portion (116) is greater than the varying second diameter (706) of the middle portion (108) and the third diameter (710) is greater than the varying second diameter (706) of the middle portion (108).

10. The line management device of any one of Claims 1-9 wherein the object (202) in the local environment (200) comprises at least one of an end of a wing panel for a cubicle, a top of a panel for a cubicle, a corner on a vertical edge of a door, a corner on a top edge of the door, a corner on a door frame of an open door, a leg of the object, a wheel of a mobile object, an outer corner of a wall, an outer corner of a half wall, a corner of a step, a corner of a pass through-like opening in a wall, a corner of a window sill and a corner of a window casing.

11. The line management device of any one of Claims 1-10 wherein the main body (104) comprises a truncated main body (902) in which a wedge (904) along the central axis (106) is truncated from a periphery (906) toward a center (908) of the main body (104), the wedge (904) forming a first truncated surface (910) in the first end portion (116), a second truncated surface (912) in the middle portion (108) and a third truncated surface (914) in the second end portion (120), the first truncated surface (910), the second truncated surface (912) and the third truncated surface (914) configured to mate with the object (202) in the local environment (200);
optionally, wherein the wedge (904) truncated from the main body (104) comprises at least one of a wedge (904) ranging from approximately 10 degrees to approximately 45 degrees, a wedge (904) ranging from approximately 45 degrees to approximately 90 degrees, an approximately 90 degree wedge (904), a wedge (904) ranging from approximately 90 degrees to approximately 135 degrees, a wedge (904) ranging from approximately 135 degrees to approximately 157.5 degrees and a wedge (904) ranging from approximately 137.5 degrees to approximately 180 degrees.

12. The line management device of Claim 11, further comprising:
an attaching mechanism (916) configured to secure the truncated main body (902) to the object (202) in the local environment (200).

13. The line management device of Claim 11 or 12, the second end portion (120) of the truncated main body (902) further comprising:
an interior end (918) abutting the second end (112) of the middle portion (108);
an exterior end (920) spaced from the interior end (918) along the central axis (106) by the third truncated surface (914); and
a retaining lip (1102) extending from the third truncated surface (914) at the exterior end (920), the retaining lip (1102) having a thickness (1104) along the central axis (106) and a length (1106) from the third truncated surface (914) into an area defined by the wedge (904), the thickness (1104) and the length (1106) of the retaining lip (1102) sized to retain the line management device (100) in relation to the object (202) in the local environment (200),
the line management device optionally further comprising:
an extension member (1202) at least temporarily attached to the exterior end (920) of the second end portion (120) such that the retaining lip (1102) in combination with the extension member (1202) is configured to fit a gap (1108) between the object (202) and a substrate (1110) in the local environment (200) where the object (202) is spaced away from the substrate (1110) by a support member (1112).

14. The line management device of Claim 11 or 12, the second end portion (120) of the truncated main body (902) further comprising:
an interior end (918) abutting the second end (112) of the middle portion (108);
an exterior end (920) spaced from the interior end (918) along the central axis (106) by the third truncated surface (914); and
a retaining lip (1102) extending from the third truncated surface (914) proximate the exterior end (920) to the second exterior surface (122), the retaining lip (1102) having a thickness (1104) along the central axis (106), the retaining lip (1102) being adjacent to an area defined by the wedge (904), the thickness (1104) of the retaining lip (1102) sized to retain the line management device (100) in relation to the object (202) in the local environment (200).

15. The line management device of any one of Claims 1-14, further comprising a scalable length (1502) along the central axis (106) and a scalable width (1504) perpendicular to the central axis (106).

16. A method (1600) for guiding local distribution of a utility line (102), comprising:
installing (1602) a line management device (100) in relation to an object (202) in a local environment (200), the line management device (100) comprising a main body (104) with a middle portion (108) having a contoured surface (114) extending between a first end (110) and a second end (112), a first end portion (116) abutting the first end (110) of the middle portion (108) and a second end portion (120) abutting the second end (112) of the middle portion (108);
placing (1604) the utility line (102) proximate to the contoured surface (114);
pulling (1606) the utility line (102) across the contoured surface (114); and
spacing (1608) the utility line (102) away from the object (202) in the local environment (200) and guiding the utility line (102) away from the object (202).

17. The line management device of any one of Claims 1-15, wherein the line management device for guiding local distribution of a utility line (102) is a cable management device (126) for guiding local distribution of an electrical cable (128), the cable management device (126) comprising:
the main body (104); and
one or more magnets (404) embedded in one or more of the middle portion (108), the first end portion (116) and the second end portion (120) of the main body (104), the one or more magnets (404) configured to secure the main body (104) to the object (202) in the local environment (200).
